# EUROPEAN PATENT APPLICATION

(11) **EP 4 597 711 A1**
(43) Date of publication of application: **06.08.2025**
(21) Application number: 24738510.7
(22) Date of filing: 03.01.2024
(51) Int. Cl.: H01M 50/262

(54) **LOCKING MECHANISM, BATTERY ASSEMBLY, ELECTRIC DEVICE, AND LOCKING APPARATUS**

(30) Priority: 03.01.2023 WO PCT/CN2023/070219; 04.05.2023 CN 202310491606
(71) Applicant: Contemporary Amperex Technology (Hong Kong) Limited, Central (HK)
(72) Inventor: WU, Shouyong, Ningde, Fujian 352100 (CN); CAO, Gen, Ningde, Fujian 352100 (CN); WANG, Chunhui, Ningde, Fujian 352100 (CN)
(74) Representative: Ran, Handong
(86) International application number: PCT/CN2024/070464
(87) International publication number: WO 2024/146577

(57) **Abstract**

The present application relates to the technical field of battery swapping, and provides a locking mechanism, a battery assembly, an electric device, and a locking apparatus. The locking mechanism comprises a locking member and an adjustment assembly. In a second direction, the size of the locking member is adjustable, such that the locking member has a locking state and an unlocking state; the locking member is configured to be engaged with a lock seat when in the locking state, such that the locking mechanism is connected to the lock seat in a first direction; and the locking member is configured to be disengaged from the lock seat when in the unlocking state, so as to allow the locking mechanism and the lock seat to be disconnected in the first direction. The adjustment assembly is connected to the locking member, and the adjustment assembly can adjust the size of the locking member in the second direction, such that the locking member is switched between the locking state and the unlocking state. The locking mechanism and the lock seat are locked by adjusting the size of the locking member in the second direction, thereby improving the use stability of the locking mechanism, reducing the damage risk of the locking mechanism, improving the use reliability of the locking mechanism, and prolonging the service life of the locking mechanism.

## Description

### CROSS-REFERENCE TO RELATED APPLICATIONS

This application claims priority to international patent application PCT/CN2023/070219 filed on January 3, 2023 and entitled "LOCKING APPARATUS, BATTERY ASSEMBLY, ELECTRIC APPARATUS, AND LOCKING MECHANISM", and Chinese patent application 2023104916069 filed on May 4, 2023 and entitled "LOCKING MECHANISM, BATTERY ASSEMBLY, ELECTRIC DEVICE, AND LOCKING APPARATUS", which are incorporated herein by reference in their entirety.

### TECHNICAL FIELD

This application relates to the field of battery swap technologies, and specifically, to a locking mechanism, a battery assembly, an electric device, and a locking apparatus.

### BACKGROUND

With the advancement of technology, the battery industry has developed rapidly, and electric devices also gain an increasing market share and usage frequency. Electrically driven vehicles such as electric vehicles have been gradually applied in various application scenarios. At the same time, to improve the convenience of electric devices, especially electrically driven vehicles, battery swap stations for quick battery replacement have emerged on the market. However, electric devices often need battery swap operations. In the battery swap process, the locking mechanism between the battery and the electric device needs to switch multiple times between locking and unlocking to fix and separate the battery and the electric device. This causes the locking mechanism to be prone to wear or damage, resulting in a short service life and low reliability of the locking mechanism, further leading to inconvenience in battery swap and potential safety hazards.

### SUMMARY

Embodiments of this application provide a locking mechanism, a battery assembly, an electric device, and a locking apparatus, which can effectively improve the service life and reliability of the locking mechanism.

According to a first aspect, an embodiment of this application provides a locking mechanism for engaging with or disengaging from a lock seat along a first direction, where the locking mechanism includes a locking member and an adjustment assembly, where along a second direction, a dimension of the locking member is adjustable to enable the locking member to have a locked state and an unlocked state, the second direction intersecting the first direction; the locking member is configured to engage with the lock seat when in the locked state, to cause the locking mechanism to engage with the lock seat along the first direction; and the locking member is configured to disengage from the lock seat when in the unlocked state, to allow the locking mechanism to disengage from the lock seat along the first direction; and the adjustment assembly is connected to the locking member, and the adjustment assembly is capable of adjusting a dimension of a portion of the locking member for cooperating with the lock seat in the second direction to switch the locking member between the locked state and the unlocked state.

In the above technical solution, the locking mechanism is provided with the locking member and the adjustment assembly. The locking member is connected to the adjustment assembly, and the dimension of the locking member in the second direction is adjustable. Through the adjustment assembly, the dimension of the portion of the locking member for cooperating with the lock seat can be adjusted in the second direction, so that the locking member can engage with or disengage from the lock seat in the first direction, enabling the locking mechanism to engage with or disengage from the lock seat in the first direction, thereby implementing locking or unlocking between the locking mechanism and the lock seat. The locking mechanism with this structure is relatively simple in structure, and easy to implement and operate when used in battery swap scenarios, effectively reducing the assembly and operation difficulty of the locking mechanism, thereby helping to improve battery swap efficiency. Moreover, the dimension of the locking member in the second direction is adjusted so that the locking member engages with the lock seat, thereby implementing mutual locking between the locking mechanism and the lock seat. In this way, the structural stability of the mutual locking between the locking mechanism and the lock seat can be improved, to reduce the risk of damage and wear of the locking mechanism during use, helping to improve the reliability and service life of the locking mechanism, greatly reducing the frequency of subsequent maintenance of the locking mechanism, and reducing the usage costs of the locking mechanism.

In some embodiments, along the second direction, a dimension of the portion of the locking member for cooperating with the lock seat in the locked state is greater than a dimension in the unlocked state.

In the above technical solution, the portion of the locking member for cooperating with the lock seat is designed to have a larger dimension in the locked state than in the unlocked state. In this way, engagement or disengagement between the locking member and the lock seat can be implemented by increasing or decreasing the dimension of the portion of the locking member for cooperating with the lock seat in the second direction, thereby implementing locking and unlocking of the locking mechanism and the lock seat. Such structure is simple and easy to implement.

In some embodiments, the locking member includes an engaging portion configured to engage with the lock seat, the engaging portion being configured to be extendable in the second direction; where when the locking member is in the locked state, the engaging portion extends in the second direction to engage with the lock seat; and when the locking member is in the unlocked state, the engaging portion retracts in the second direction to disengage from the lock seat.

In the above technical solution, with the engaging portion of the locking member arranged as a structure extendable in the second direction, the engaging portion of the locking member can expand or retract in the second direction to implement engagement or disengagement between the locking member and the lock seat, thereby implementing locking and unlocking of the locking mechanism and the lock seat. Such structure is simple and easy to implement.

In some embodiments, the adjustment assembly includes a sleeve and an adjustment member; where the locking member is disposed in the sleeve, and the sleeve has an engaging surface facing the engaging portion in the first direction, the engaging surface being configured to abut against the lock seat when the locking member is in the locked state; and the adjustment member is rotatably inserted into the sleeve around an axis extending in the first direction, and the adjustment member is capable of rotating relative to the sleeve to switch the locking member between the locked state and the unlocked state; where a minimum distance between the engaging portion and the engaging surface in the first direction remains unchanged when the locking member switches from the locked state to the unlocked state.

In the above technical solution, the engaging surface of the sleeve is arranged to be able to abut against the lock seat in the first direction when the locking member engages with the lock seat and is in the locked state, so that the locking mechanism can clamp the lock seat in the first direction through the engaging portion of the locking member and the engaging surface of the sleeve. This helps to reduce shaking of the locking mechanism during use, thereby improving the stability of mutual locking between the locking mechanism and the lock seat. Additionally, the minimum distance between the engaging portion of the locking member and the engaging surface of the sleeve for abutting against the lock seat is maintained unchanged in the first direction, so that the engaging surface abuts against the lock seat when the locking member engages with the lock seat, with no need to adjust the position of the locking member relative to the sleeve in the first direction. This helps to reduce the structural complexity of the locking mechanism.

In some embodiments, the adjustment assembly includes a sleeve and an adjustment member, where the locking member is disposed in the sleeve; and the adjustment member is rotatably inserted into the sleeve around an axis extending in the first direction, and the adjustment member is capable of rotating relative to the sleeve to adjust the dimension of the portion of the locking member for cooperating with the lock seat in the second direction.

In the above technical solution, the adjustment assembly is provided with a sleeve and an adjustment member that is rotatably inserted into the sleeve around an axis extending in the first direction. Through rotation of the adjustment member, the dimension of the portion of the locking member for cooperating with the lock seat can be adjusted in the second direction, enabling the locking member to engage with or disengage from the lock seat. The locking mechanism with this structure is convenient for subsequent operations. The locking or unlocking between the locking mechanism and the lock seat can be implemented simply by rotating the adjustment member, helping to improve the operation efficiency and convenience of the locking mechanism.

In some embodiments, the locking member includes an engaging portion configured to engage with the lock seat, where the engaging portion is arranged with the sleeve along the first direction, the sleeve has an engaging surface facing the engaging portion in the first direction, and the engaging surface and the engaging portion are configured to abut against different positions of the lock seat in the first direction when the locking member is in the locked state.

In the above technical solution, the sleeve is provided with the engaging surface facing the engaging portion in the first direction, and the engaging surface and the engaging portion of the locking member can abut against different positions of the lock seat in the first direction when the locking member is in the locked state, so that the locking mechanism can clamp the lock seat in the first direction through the engaging portion of the locking member and the engaging surface of the sleeve. This helps to reduce shaking of the locking mechanism during use, improving the stability and reliability of mutual locking between the locking mechanism and the lock seat.

In some embodiments, the locking member includes a fixed portion, a movable portion, and a first engaging portion, where the fixed portion is fixed to the sleeve; the movable portion is connected to the adjustment member, the movable portion being spaced from the fixed portion along the first direction; the first engaging portion connects the movable portion and the fixed portion, the first engaging portion being configured to engage with the lock seat; where the adjustment member is configured to be able to drive, when rotating relative to the sleeve, the movable portion to approach or leave the fixed portion along the first direction, causing the first engaging portion to expand or retract in the second direction to adjust the dimension of the locking member in the second direction.

In the above technical solution, the locking member is provided with the fixed portion, the movable portion, and the first engaging portion connecting the fixed portion and the movable portion. The fixed portion is fixed to the sleeve, and the movable portion is movably disposed on the fixed portion along the first direction, so that the adjustment member is able to drive, when rotating, the movable portion to approach or leave the fixed portion along the first direction, causing the first engaging portion connecting the fixed portion and the movable portion to expand or retract in the second direction. In this way, the first engaging portion can engage with or disengage from the lock seat, implementing the engagement or disengagement between the locking mechanism and the lock seat in the first direction.

In some embodiments, the first engaging portion includes a first engaging section and a second engaging section that are hinged to each other, where an end of the first engaging section far from the second engaging section is hinged to the movable portion, and an end of the second engaging section far from the first engaging section is hinged to the fixed portion.

In the above technical solution, the first engaging portion is provided with the first engaging section and the second engaging section that are hinged to each other, and the first engaging section and the second engaging section are respectively hinged to the movable portion and the fixed portion, so that when the movable portion and the fixed portion approach or leave each other in the first direction, the included angle between the first engaging section and the second engaging section can be adjusted, allowing the hinge position of the first engaging section and the second engaging section to move in the second direction, further allowing the first engaging portion to expand or retract in the second direction. Such structure is simple and easy to implement.

In some embodiments, the locking member includes two first engaging portions, and the two first engaging portions are disposed on two sides of the movable portion along the second direction.

In the above technical solution, the locking member is provided with two first engaging portions, and the two first engaging portions are arranged on two sides of the movable portion along the second direction, so that the two first engaging portions can expand or retract on the two sides of the movable portion, respectively, further expanding the dimension adjustment range of the locking member in the second direction. This helps to improve the stability and reliability of mutual engagement between the locking member and the lock seat, thereby effectively enhancing the stability and reliability of mutual locking between the locking mechanism and the lock seat.

In some embodiments, the adjustment member includes a connecting section extending out of the sleeve along the first direction, where the movable portion fits around the connecting section, and the movable portion is threadedly connected to the connecting section.

In the above technical solution, the adjustment member has the connecting section extending out of the sleeve in the first direction, and the movable portion is threadedly connected to the outer side of the connecting section. Since the movable portion is connected to the fixed portion through the first engaging portion, and the fixed portion is fixed to the sleeve, the movable portion and the sleeve form a circumferentially locked structure, so that when the adjustment member rotates relative to the sleeve, the movable portion can move in the first direction under the action of the threads, allowing the movable portion to drive the first engaging portion to expand or retract in the second direction. Such structure is simple, and a self-locking structure is formed between the movable portion and the adjustment member to mitigate the phenomenon of the movable portion slipping relative to the adjustment member in the first direction, thereby improving the reliability of mutual locking between the locking mechanism and the lock seat.

In some embodiments, the locking member includes a connecting portion and a second engaging portion, where the connecting portion extends in the first direction and is connected to the adjustment member, and the connecting portion is inserted in the sleeve; and the second engaging portion is connected to an end of the connecting portion far from the adjustment member, the second engaging portion protrudes from an outer peripheral surface of the connecting portion along an extending direction of the second engaging portion, and the second engaging portion is configured to engage with the lock seat; where the adjustment member is configured to be able to drive rotation of the connecting portion when rotating relative to the sleeve, so that the extending direction of the second engaging portion deviates from or aligns with the second direction, so as to adjust the dimension of the locking member in the second direction.

In the above technical solution, the locking member is provided with the connecting portion and the second engaging portion connected to an end of the connecting portion, and the second engaging portion protrudes from the outer peripheral surface of the connecting portion along the extending direction of the second engaging portion. With the connecting portion inserted in the adjustment assembly along the first direction and connected to the adjustment member, the adjustment member is able to drive, when rotating, the connecting portion to rotate, so that the second engaging portion can rotate along with the connecting portion, making the extending direction of the second engaging portion deviate from or align with the second direction, that is, enabling the second engaging portion to rotate to align with the second direction or causing the second engaging portion to deviate from the second direction. This allows the second engaging portion to engage with or disengage from the lock seat after rotation, so as to adjust the dimension of the locking member in the second direction, allowing the locking mechanism to engage with or disengage from the lock seat in the first direction.

In some embodiments, an angle of rotation of the connecting portion relative to the sleeve when the locking member switches from the unlocked state to the locked state is α, satisfying 0° < α < 180°.

In the above technical solution, the angle of rotation of the connecting portion is set to be greater than 0 degrees and less than 180 degrees when the locking member switches from the unlocked state to the locked state, so that the dimension of the locking member in the second direction can be adjusted when the second engaging portion rotates with the connecting portion by a small angle greater than 0 degrees, allowing the second engaging portion to engage with the lock seat. This can also alleviate the phenomenon that the second engaging portion rotates with the connecting portion to become parallel to the second engaging portion when the locking member is in the unlocked state, thereby reducing the risk of the second engaging portion being unable to engage with the lock seat, and improving the reliability of mutual locking between the locking mechanism and the lock seat.

In some embodiments, the sleeve is provided with a first limiting portion, and the connecting portion is provided with a second limiting portion, the first limiting portion and the second limiting portion cooperating to limit an angle of rotation of the connecting portion.

In the above technical solution, the first limiting portion and the second limiting portion are correspondingly disposed on the sleeve and the connecting portion, respectively, so that the first limiting portion and the second limiting portion can cooperate to limit the angle of rotation of the connecting portion, allowing the connecting portion to drive, when limited through cooperation between the first limiting portion and the second limiting portion, the second engaging portion to engage with or disengage from the lock seat, thereby facilitating the switching of the locking member between the locked state and the unlocked state. Such structure is simple and easy to operate, and can alleviate the phenomenon that the second engaging portion cannot engage with the lock seat due to the excessively large angle by which the second engaging portion rotates with the connecting portion.

In some embodiments, the first limiting portion and the second limiting portion are configured to cooperate, when the adjustment member rotates relative to the sleeve, to guide the connecting portion to move along the first direction, causing the second engaging portion to move between a first position and a second position along the first direction; where when the second engaging portion is in the first position, the extending direction of the second engaging portion is consistent with the second direction to allow the second engaging portion to engage with the lock seat; and when the second engaging portion is in the second position, the extending direction of the second engaging portion deviates from the second direction to allow the second engaging portion to disengage from the lock seat.

In the above technical solution, while limiting the angle of rotation of the connecting portion, the first limiting portion and the second limiting portion cooperate to guide the connecting portion to move relative to the sleeve in the first direction, enabling the adjustment member to drive the connecting portion to rotate relative to the sleeve while driving the connecting portion to move along the first direction. This allows the adjustment member to drive the second engaging portion to engage with the lock seat and drive the second engaging portion to abut against the lock seat, reducing the gap size between the second engaging portion and the lock seat, thereby reducing the phenomenon of vibration between the locking mechanism and the lock seat.

In some embodiments, the first limiting portion is a limiting groove provided on an inner peripheral surface of the sleeve, the second limiting portion is a protrusion disposed on an outer peripheral surface of the connecting portion, and the protrusion is accommodated in the limiting groove.

In the above technical solution, the first limiting portion and the second limiting portion are a limiting groove provided on the sleeve and a protrusion disposed on the connecting portion, respectively. With the protrusion inserted into the limiting groove, the protrusion can limit the angle of rotation of the connecting portion under the restriction of the limiting groove, and the protrusion can cause, under the guidance of the limiting groove, the connecting portion to rotate relative to the sleeve and move along the first direction relative to the sleeve. Such structure is simple, easy to implement, and highly stable.

In some embodiments, the limiting groove includes a first groove section, a second groove section, and a third groove section sequentially connected, where the first groove section and the third groove section both extend in the first direction, the first groove section and the third groove section are spaced apart from each other along a circumferential direction of the connecting portion, and the first groove section and the third groove section are spaced apart along the first direction, where in the first direction, the third groove section is closer to the second engaging portion than the first groove section; and when the second engaging portion is in the first position, the protrusion is in the first groove section; and when the second engaging portion is in the second position, the protrusion is in the third groove section.

In the above technical solution, both the first groove section and the third groove section of the limiting groove are arranged as structures extending in the first direction, and the first groove section and the third groove section are spaced apart from each other in both the first direction and the circumferential direction of the connecting portion, making the second groove section a helical groove connecting the first groove section and the third groove section. In this way, when the protrusion of the connecting portion is in the first groove section and the third groove section, it can only follow the extending direction of the first groove section and the second groove section to move in the first direction; and when the protrusion of the connecting portion is in the second groove section, it can follow the extending direction of the second groove section to rotate relative to the sleeve and move relative to the sleeve along the first direction, thereby limiting the angle of rotation of the connecting portion and allowing movement between the first position and the second position along the first direction. In addition, the third groove section is disposed closer to the second engaging portion than the first groove section in the first direction, so that when the protrusion is in the first groove section, the second engaging portion can be closer to the sleeve while engaging with the lock seat, enabling the second engaging portion to abut against the lock seat in the first direction.

In some embodiments, the adjustment member has a connecting section, where the connecting section fits around the connecting portion, and the connecting section is threadedly connected to the connecting portion.

In the above technical solution, the adjustment member has the connecting section, and the connecting section is threadedly connected to the outer side of the connecting portion, so that rotation of the adjustment member can drive the connecting portion to rotate together, and when the rotation of the connecting portion is circumferentially limited, the adjustment member can provide a feed force to the connecting portion along the first direction, enabling the connecting portion to move along the first direction. Such structure is simple and easy to implement, and a self-locking structure is formed between the connecting portion and the adjustment member, to mitigate the phenomenon of the connecting portion slipping relative to the adjustment member in the first direction, thereby improving the reliability of mutual locking between the locking mechanism and the lock seat.

In some embodiments, the sleeve is provided with a first guiding portion, and the adjustment member is provided with a second guiding portion, the first guiding portion and the second guiding portion being configured to cooperate, when the adjustment member rotates relative to the sleeve, to guide the adjustment member to move along the first direction to adjust the dimension of the locking member in the second direction.

In the above technical solution, the first guiding portion and the second guiding portion are respectively disposed on the sleeve and the adjustment member, so that the adjustment member can move relative to the sleeve along the first direction while rotating relative to the sleeve under the guiding cooperation of the first guiding portion and the second guiding portion. In this way, the dimension of the locking member in the second direction can be adjusted by moving the adjustment member, thereby enabling the locking mechanism to engage with or disengage from the lock seat in the first direction.

In some embodiments, the first guiding portion is an internal thread provided on an inner peripheral surface of the sleeve, and the second guiding portion is an external thread provided on an outer peripheral surface of the adjustment member.

In the above technical solution, the first guiding portion and the second guiding portion are respectively an internal thread provided on the inner peripheral surface of the sleeve and an external thread provided on the outer peripheral surface of the adjustment member, that is, the adjustment member is threadedly connected to the sleeve. This structure enables the adjustment member to move relative to the sleeve along the first direction while rotating relative to the sleeve. Such structure is simple and easy to implement, and a self-locking structure is formed between the adjustment member and the sleeve, to mitigate the phenomenon of the adjustment member slipping relative to the sleeve in the first direction, thereby improving the reliability of mutual locking between the locking mechanism and the lock seat.

In some embodiments, the locking member includes an inserting portion and a third engaging portion, where the inserting portion is connected to an end of the sleeve in the first direction; and the third engaging portion is movably disposed in the inserting portion, the third engaging portion being configured to engage with the lock seat; where the adjustment member is configured to drive, when moving relative to the sleeve along the first direction, the third engaging portion to protrude from an outer peripheral surface of the inserting portion or allow the third engaging portion to retract into the inserting portion, so as to adjust the dimension of the locking member in the second direction.

In the above technical solution, the locking member is provided with the inserting portion and the third engaging portion. The inserting portion is connected to the end of the sleeve in the first direction, and the third engaging portion is movably disposed on the inserting portion, so that when the adjustment member moves relative to the sleeve along the first direction, it can drive the third engaging portion to protrude from the outer peripheral surface of the inserting portion or allow the third engaging portion to retract into the inserting portion, enabling the third engaging portion to engage with or disengage from the lock seat to adjust the dimension of the locking member in the second direction, thereby implementing the engagement or disengagement between the locking mechanism and the lock seat in the first direction.

In some embodiments, an accommodating cavity communicating with the inside of the sleeve is formed inside the inserting portion, the adjustment member being inserted into the accommodating cavity along the first direction; and a mounting hole is disposed on the outer peripheral surface of the inserting portion, the mounting hole communicating with the accommodating cavity, and the third engaging portion being movably disposed in the mounting hole.

In the above technical solution, the accommodating cavity for insertion of the adjustment member is formed inside the inserting portion, and the mounting hole communicating with the accommodating cavity is disposed on the outer peripheral surface of the inserting portion. The third engaging portion is movably disposed in the mounting hole, so that the adjustment member can push, when moving relative to the inserting portion along the first direction inside the accommodating cavity, the third engaging portion to protrude from the outer peripheral surface of the inserting portion, allowing the third engaging portion to engage with the lock seat or allowing the third engaging portion to retract into the inserting portion, thereby enabling the third engaging portion to disengage from the lock seat.

In some embodiments, along the first direction, a guiding inclined surface is formed at an end of the adjustment member close to the inserting portion, where the guiding inclined surface is configured to abut against the third engaging portion and push the third engaging portion to protrude from the outer peripheral surface of the inserting portion.

In the above technical solution, the guiding inclined surface for the third engaging portion to abut against is provided at the end of the adjustment member close to the inserting portion, so that the third engaging portion can protrude from the outer peripheral surface of the inserting portion under the guidance of the guiding inclined surface when the adjustment member moves in the first direction, allowing the adjustment member to drive the third engaging portion to protrude from the outer peripheral surface of the inserting portion or allowing the third engaging portion to retract into the inserting portion. Therefore, the locking mechanism with this structure can reduce the occurrence of mutual jamming between the adjustment member and the third engaging portion.

In some embodiments, the locking member includes a plurality of third engaging portions, where the plurality of third engaging portions are disposed around the adjustment member, and at least one of the third engaging portions is movably disposed in the inserting portion along the second direction.

In the above technical solution, the locking member is provided with a plurality of third engaging portions, the plurality of third engaging portions are disposed around the adjustment member, and at least one of the third engaging portions is movably disposed in the inserting portion along the second direction. This enables all the plurality of third engaging portions to protrude from the outer peripheral surface of the inserting portion under the drive of the adjustment member, so that the dimension of the locking member in the second direction as well as in other directions perpendicular to the first direction can be adjusted. This helps to improve the stability and reliability of mutual engagement between the locking member and the lock seat, thereby effectively enhancing the stability and reliability of mutual locking between the locking mechanism and the lock seat.

In some embodiments, the third engaging portion is spherical.

In the above technical solution, the third engaging portion is arranged as a spherical structure, so that the third engaging portion can be pushed to protrude from the outer peripheral surface of the inserting portion or allowed to retract into the inserting portion when the adjustment member moves in the first direction relative to the sleeve, thereby reducing the occurrence of mutual jamming between the adjustment member and the third engaging portion.

In some embodiments, the locking mechanism further includes an anti-loosening assembly, where the anti-loosening assembly is disposed between the sleeve and the adjustment member, and the anti-loosening assembly is configured to selectively lock the adjustment member to the sleeve to limit the adjustment member to rotate relative to the sleeve.

In the above technical solution, the locking mechanism is also provided with the anti-loosening assembly. The anti-loosening assembly is disposed between the sleeve and the adjustment member to selectively lock the adjustment member to the sleeve. To be specific, when the anti-loosening assembly releases the sleeve and the adjustment member, the anti-loosening assembly allows the adjustment member to rotate relative to the sleeve so as to adjust the dimension of the locking member in the second direction; and when the anti-loosening assembly locks the sleeve and the adjustment member, the anti-loosening assembly can limit the adjustment member to rotate relative to the sleeve, thereby alleviating the phenomenon of poor engagement between the locking member and the lock seat caused by accidental rotation of the adjustment member, improving the locking effect between the locking member and the lock seat, and enhancing the stability and reliability of mutual locking between the locking mechanism and the lock seat.

In some embodiments, the anti-loosening assembly includes a first clutch member and a second clutch member, where the first clutch member is disposed on the sleeve; the second clutch member is disposed on the adjustment member; where the first clutch member and the second clutch member are configured to: when engaged with each other, limit the adjustment member to rotate relative to the sleeve; and when disengaged from each other, allow the adjustment member to rotate relative to the sleeve.

In the above technical solution, the anti-loosening assembly is provided with the first clutch member and the second clutch member that can engage with and disengage from each other, and the first clutch member and the second clutch member are respectively disposed on the sleeve and the adjustment member, so that rotation of the adjustment member relative to the sleeve can be limited through engagement cooperation between the first clutch member and the second clutch member. Additionally, when the first clutch member and the second clutch member disengage from each other, the adjustment member can rotate relative to the sleeve. In this way, the anti-loosening assembly can selectively lock the adjustment member and the sleeve.

In some embodiments, the first clutch member and the second clutch member are arranged along the first direction, where the first clutch member is fixed to the sleeve, the second clutch member is circumferentially locked to the adjustment member, and the second clutch member is movably disposed on the adjustment member along the first direction to allow the second clutch member to engage with or disengage from the first clutch member.

In the above technical solution, the first clutch member and the second clutch member are arranged along the first direction, and the second clutch member is movably disposed on the adjustment member along the first direction. The first clutch member is fixed to the sleeve, and the second clutch member is arranged as a structure circumferentially locked with the adjustment member, so that the engagement or disengagement between the second clutch member and the first clutch member can be implemented by moving the second clutch member, so as to limit the adjustment member to rotate relative to the sleeve or allow the adjustment member to rotate relative to the sleeve. The anti-loosening assembly with this structure is simple in structure and easy to operate and implement.

In some embodiments, the adjustment member includes a guiding section inserted in the sleeve, where the second clutch member movably fits around the guiding section along the first direction, a first circumferential limiting portion is disposed on an outer peripheral surface of the guiding section, a second circumferential limiting portion is disposed on an inner peripheral surface of the second clutch member, and the second circumferential limiting portion and the first circumferential limiting portion cooperate to circumferentially lock the second clutch member to the adjustment member.

In the above technical solution, the adjustment member has the guiding section, and the second clutch member movably fits around the guiding section along the first direction. The first circumferential limiting portion is disposed on the outer peripheral surface of the guiding section, and the second circumferential limiting portion that cooperates with the first circumferential limiting portion is correspondingly disposed on the inner peripheral surface of the second clutch member, so that the second clutch member can move relative to the adjustment member along the first direction and is circumferentially locked.

In some embodiments, the first circumferential limiting portion is a spline extending in the first direction, and the second circumferential limiting portion is a spline groove cooperating with the spline.

In the above technical solution, the first circumferential limiting portion and the second circumferential limiting portion are arranged as a spline and a spline groove extending in the first direction, that is, the spline extending in the first direction is disposed on the outer peripheral surface of the guiding section of the adjustment member, and the spline groove cooperating with the spline is disposed on the inner peripheral surface of the second clutch member, so that the second clutch member can be circumferentially locked to the adjustment member, but can move relative to the adjustment member along the first direction. Such structure is simple and highly stable.

In some embodiments, along the first direction, a first toothed portion is provided at an end of the first clutch member facing the second clutch member, and a second toothed portion is provided at an end of the second clutch member facing the first clutch member, where the second toothed portion is configured to mesh with the first toothed portion to implement engagement between the second clutch member and the first clutch member.

In the above technical solution, the first toothed portion is disposed at an end of the first clutch member facing the second clutch member, and correspondingly, the second toothed portion is disposed at an end of the second clutch member facing the first clutch member, so that when the second clutch member moves in the first direction, the second toothed portion can engage with or disengage from the first toothed portion, thereby implementing engagement or disengagement between the second clutch member and the first clutch member. In this way, when the first toothed portion and the second toothed portion mesh with each other, the first clutch member and the second clutch member can cooperate to limit the rotation of the adjustment member relative to the sleeve. Such structure is simple and easy to implement. In addition, the first toothed portion and the second toothed portion are respectively disposed on the first clutch member and the second clutch member, which can reduce the difficulty of engagement and disengagement between the first clutch member and the second clutch member, facilitating engagement or disengagement between the first clutch member and the second clutch member.

In some embodiments, along the first direction, a first inclined surface is formed at an end of the first clutch member facing the second clutch member, and a second inclined surface is formed at an end of the second clutch member facing the first clutch member, the second inclined surface fitting with the first inclined surface; where the first toothed portion is provided on the first inclined surface, and the second toothed portion is provided on the second inclined surface.

In the above technical solution, the first inclined surface is disposed at the end of the first clutch member facing the second clutch member, the first toothed portion being provided on the first inclined surface, and correspondingly, the second inclined surface that fits with the first inclined surface is disposed at the end of the second clutch member facing the first clutch member, the second toothed portion being provided on the second inclined surface. In this structure, the first toothed portion and the second toothed portion are inclined structures that fit with each other, thereby providing a certain guiding function for the first toothed portion and the second toothed portion to mesh with each other.

In some embodiments, the first inclined surface is a concave surface provided on the first clutch member, and the second inclined surface is a convex surface provided on the second clutch member.

In the above technical solution, the first inclined surface is arranged as a concave surface and the second inclined surface is arranged as a convex surface, so that the second clutch member can be inserted into the first clutch member when the second toothed portion of the second clutch member meshes with the first toothed portion of the first clutch member, which helps to improve the stability and reliability of the engagement between the second clutch member and the first clutch member, thereby reducing the occurrence of slippage during the engagement between the second clutch member and the first clutch member.

In some embodiments, the anti-loosening assembly further includes an elastic member, where the elastic member is disposed between the sleeve and the second clutch member, and the elastic member is configured to drive the second clutch member to move toward the first clutch member, so as to cause the second clutch member to engage with the first clutch member.

In the above technical solution, the anti-loosening assembly is further provided with an elastic member, and the elastic member is disposed between the sleeve and the second clutch member. The elastic force of the elastic member can drive the second clutch member to move toward the first clutch member, enabling the engagement between the first clutch member and the second clutch member. The anti-loosening assembly with this structure can further improve the stability of the engagement between the first clutch member and the second clutch member, reducing the occurrence of accidental disengagement between the first clutch member and the second clutch member. Moreover, after the second clutch member and the first clutch member disengage from each other, the elastic member enables the automatic engagement between the second clutch member and the first clutch member without manual intervention, thereby facilitating operation and use.

In some embodiments, the anti-loosening assembly further includes a stopper, where the stopper is connected inside the sleeve and surrounds the adjustment member, the elastic member fits around an outer side of the adjustment member, and two ends of the elastic member in the first direction abut against the stopper and the second clutch member, respectively.

In the above technical solution, the anti-loosening assembly is further provided with a stopper, the stopper is connected inside the sleeve and surrounds the adjustment member, and the elastic member fits around the outer side of the adjustment member. Two ends of the elastic member abut against the stopper and the second clutch member, respectively, so that the elastic member is disposed between the sleeve and the second clutch member. The anti-loosening assembly with this structure helps to reduce the difficulty of assembling the elastic member between the sleeve and the second clutch member, and also helps to improve the assembly stability of the elastic member between the sleeve and the second clutch member, thereby reducing falling-off of the elastic member.

In some embodiments, the locking member includes a fixed portion, a movable portion, and a first engaging portion, where the fixed portion is fixed to the adjustment assembly; the movable portion is connected to the adjustment assembly, the movable portion is spaced apart from the fixed portion in the first direction, and the movable portion is movably disposed on the fixed portion in the first direction; the first engaging portion connects the movable portion and the fixed portion, and the first engaging portion is configured to engage with the lock seat; where the adjustment assembly is configured to drive the movable portion to approach or leave the fixed portion along the first direction, causing the first engaging portion to expand or retract in the second direction to adjust the dimension of the locking member in the second direction.

In the above technical solution, the locking member is provided with the fixed portion, the movable portion, and the first engaging portion connecting the fixed portion and the movable portion. The fixed portion is fixed to the adjustment assembly, and the movable portion is movably disposed on the fixed portion along the first direction. In this way, the adjustment assembly can drive the movable portion to approach or leave the fixed portion along the first direction, so that the first engaging portion connected between the fixed portion and the movable portion can expand or retract in the second direction to enable the first engaging portion to engage with or disengage from the lock seat, thereby enabling the locking mechanism to engage with or disengage from the lock seat along the first direction.

**In** some embodiments, the first engaging portion includes a first engaging section and a second engaging section that are hinged to each other, where an end of the first engaging section far from the second engaging section is hinged to the movable portion, and an end of the second engaging section far from the first engaging section is hinged to the fixed portion.

**In** the above technical solution, the first engaging portion is provided with the first engaging section and the second engaging section that are hinged to each other, and the first engaging section and the second engaging section are respectively hinged to the movable portion and the fixed portion, so that when the movable portion and the fixed portion approach or leave each other in the first direction, the included angle between the first engaging section and the second engaging section can be adjusted, allowing the hinge position of the first engaging section and the second engaging section to move in the second direction, further allowing the first engaging portion to expand or retract in the second direction. Such structure is simple and easy to implement.

In some embodiments, the locking member includes a connecting portion and a second engaging portion, where the connecting portion extends in the first direction and is connected to the adjustment assembly; the second engaging portion is connected to an end of the connecting portion far from the adjustment assembly, where the second engaging portion protrudes from an outer peripheral surface of the connecting portion along an extending direction of the second engaging portion, and the second engaging portion is configured to engage with the lock seat; where the adjustment assembly is configured to drive the connecting portion to rotate, so that the extending direction of the second engaging portion deviates from or aligns with the second direction, so as to adjust the dimension of the locking member in the second direction.

In the above technical solution, the locking member is provided with the connecting portion and the second engaging portion connected to an end of the connecting portion, and the second engaging portion protrudes from the outer peripheral surface of the connecting portion along the extending direction of the second engaging portion. With the connecting portion connected to the adjustment assembly, the adjustment assembly can drive the connecting portion to rotate, so that the second engaging portion can rotate with the connecting portion, allowing the extending direction of the second engaging portion to deviate from or align with the second direction, that is, allowing the second engaging portion rotate to align with the second direction or deviate from the second direction. This allows the second engaging portion to engage with or disengage from the lock seat after rotation, so as to adjust the dimension of the locking member in the second direction, allowing the locking mechanism to engage with or disengage from the lock seat in the first direction.

In some embodiments, the locking member includes an inserting portion and a third engaging portion, where the inserting portion is connected to the adjustment assembly; and the third engaging portion is movably disposed in the inserting portion, the third engaging portion being configured to engage with the lock seat; where the adjustment assembly is configured to drive the third engaging portion to protrude from the outer peripheral surface of the inserting portion or allow the third engaging portion to retract into the inserting portion to adjust the dimension of the locking member in the second direction.

In the above technical solution, the locking member is provided with the inserting portion and the third engaging portion, the inserting portion is connected to the adjustment assembly, and the third engaging portion is movably disposed in the inserting portion. In this way, the adjustment assembly drives the third engaging portion to protrude from the outer peripheral surface of the inserting portion or allows the third engaging portion to retract into the inserting portion to implement engagement or disengagement between the third engaging portion and the lock seat, thereby adjusting the dimension of the locking member in the second direction, and allowing the locking mechanism to engage with or disengage from the lock seat in the first direction.

In some embodiments, the second direction is perpendicular to the first direction.

In the above technical solution, the second direction is a direction perpendicular to the first direction, so that the adjustment assembly can adjust the dimension of the locking member in the direction perpendicular to the first direction, implementing the engagement or disengagement between the locking member and the lock seat. The locking mechanism with this structure helps to further enhance the reliability of mutual engagement between the locking member and the lock seat, improving the stability and reliability of mutual locking between the locking mechanism and the lock seat.

According to a second aspect, an embodiment of this application further provides a battery assembly including a battery and the foregoing locking mechanism, where the locking mechanism is mounted on the battery.

In the above technical solution, with the locking mechanism mounted on the battery, the battery can be locked to or unlocked from the lock seat of the target object through the locking mechanism, implementing the battery swap function.

According to a third aspect, an embodiment of this application further provides an electric device including a lock seat and the foregoing battery assembly, where the locking mechanism is configured to engage with or disengage from the lock seat along the first direction, and the battery is configured to provide electric energy.

In the above technical solution, the electric device is provided with the lock seat and the battery assembly, so that the battery of the battery assembly can engage with or disengage from the lock seat of the electric device through the locking mechanism, implementing the battery swap function of the electric device and facilitating battery replacement. This is easy to operate, helping to improve the battery swap efficiency of the electric device.

In some embodiments, the lock seat is provided with a lock hole for insertion of the locking member; the lock seat is configured to prevent the locking member from disengaging from the lock hole when the locking member is in the locked state, so as to cause the locking mechanism to engage with the lock seat along the first direction; and the lock seat is further configured to allow the locking member to disengage from the lock hole when the locking member is in the unlocked state, so as to allow the locking mechanism to disengage from the lock seat along the first direction.

In the above technical solution, the lock seat is provided with the lock hole for insertion of the locking member, so that adjusting the dimension of the locking member after inserted into the lock hole can implement engagement or disengagement between the locking member and the lock seat, allowing the locking mechanism to engage with or disengage from the lock seat in the first direction.

In some embodiments, the lock seat includes a fixed seat and a lock seat body, where the lock seat body is floatingly disposed on the fixed seat in a direction perpendicular to the first direction, and the lock seat body is provided with a lock hole on a side in the first direction.

In the above technical solution, the lock seat body is floatingly disposed on the fixed seat in the direction perpendicular to the first direction, allowing for a certain correction function for the lock seat body. In this way, the lock seat body can float relative to the fixed seat when the locking member of the locking mechanism is inserted into the lock hole, so that the locking member can be stably inserted in the lock hole. This structure allows the locking member to be inserted in the lock hole without requiring high assembly accuracy between the locking mechanism and the lock seat, helping to reduce manufacturing costs. Additionally, when there is a deviation between the locking member and the lock hole, this structure can alleviate the phenomenon of rigid contact between the locking member and the lock seat, helping to reduce the risk of damage to the locking mechanism or the lock seat.

In some embodiments, the lock seat body has a first surface on a side in the first direction, and the lock seat body further has a guidance inclined surface, where the guidance inclined surface connects the first surface and a hole wall surface of the lock hole, and the guidance inclined surface is configured to guide the locking member into the lock hole.

In the above technical solution, the first surface is formed on the side of the lock seat body where the lock hole is provided, and the first surface is connected to the hole wall surface of the lock hole through the guidance inclined surface. In this way, when there is a deviation between the locking member and the lock hole, the guidance inclined surface can guide the locking member, driving the lock seat body to float relative to the fixed seat to facilitate the insertion of the locking member into the lock hole.

According to a fourth aspect, an embodiment of this application further provides a locking apparatus including a lock seat and the foregoing locking mechanism, where the locking mechanism is configured to engage with or disengage from the lock seat along the first direction.

In some embodiments, the lock seat is provided with a lock hole for insertion of the locking member; the lock seat is configured to prevent the locking member from disengaging from the lock hole when the locking member is in the locked state, so as to cause the locking mechanism to engage with the lock seat along the first direction; and the lock seat is further configured to allow the locking member to disengage from the lock hole when the locking member is in the unlocked state, so as to allow the locking mechanism to disengage from the lock seat along the first direction.

In the above technical solution, the lock seat is provided with the lock hole for insertion of the locking member, so that adjusting the dimension of the locking member after inserted into the lock hole can implement engagement or disengagement between the locking member and the lock seat, allowing the locking mechanism to engage with or disengage from the lock seat in the first direction.

In some embodiments, the lock seat includes a fixed seat and a lock seat body, where the lock seat body is floatingly disposed on the fixed seat in a direction perpendicular to the first direction, and the lock seat body is provided with a lock hole on a side in the first direction.

In the above technical solution, the lock seat body is floatingly disposed on the fixed seat in the direction perpendicular to the first direction, allowing for a certain correction function for the lock seat body. In this way, the lock seat body can float relative to the fixed seat when the locking member of the locking mechanism is inserted into the lock hole, so that the locking member can be stably inserted in the lock hole. This structure allows the locking member to be inserted in the lock hole without requiring high assembly accuracy between the locking mechanism and the lock seat, helping to reduce manufacturing costs. Additionally, when there is a deviation between the locking member and the lock hole, this structure can alleviate the phenomenon of rigid contact between the locking member and the lock seat, helping to reduce the risk of damage to the locking mechanism or the lock seat.

In some embodiments, the lock seat body has a first surface on a side in the first direction, and the lock seat body further has a guidance inclined surface, where the guidance inclined surface connects the first surface and a hole wall surface of the lock hole, and the guidance inclined surface is configured to guide the locking member into the lock hole.

In the above technical solution, the first surface is formed on the side of the lock seat body where the lock hole is provided, and the first surface is connected to the hole wall surface of the lock hole through the guidance inclined surface. In this way, when there is a deviation between the locking member and the lock hole, the guidance inclined surface can guide the locking member, driving the lock seat body to float relative to the fixed seat to facilitate the insertion of the locking member into the lock hole.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a partial structural diagram of a vehicle according to some embodiments of this application;
FIG. 3 is an exploded view of a partial structure of a vehicle according to some embodiments of this application;
FIG. 4 is an exploded view of a structure of a battery according to some embodiments of this application;
FIG. 5 is a schematic structural diagram of a locking mechanism according to some embodiments of this application;
FIG. 6 is an exploded view of a structure of a locking mechanism according to some embodiments of this application;
FIG. 7 is a front view of a locking mechanism according to some embodiments of this application;
FIG. 8 is a schematic structural diagram of a locking mechanism according to some other embodiments of this application;
FIG. 9 is an exploded view of a structure of a locking mechanism according to some other embodiments of this application;
FIG. 10 is a cross-sectional view of a locking mechanism according to some other embodiments of this application;
FIG. 11 is a schematic diagram of connection between a locking mechanism and a lock seat according to some other embodiments of this application;
FIG. 12 is a cross-sectional view of a sleeve of a locking mechanism according to some other embodiments of this application;
FIG. 13 is a schematic structural diagram of a locking mechanism according to still some other embodiments of this application;
FIG. 14 is an exploded view of a structure of a locking mechanism according to still some other embodiments of this application;
FIG. 15 is a cross-sectional view of a locking mechanism according to still some other embodiments of this application;
FIG. 16 is a partial enlarged view of point A of the locking mechanism shown in FIG. 15;
FIG. 17 is a schematic structural diagram of a second clutch member of an anti-loosening assembly according to some embodiments of this application;
FIG. 18 is a schematic structural diagram of a first clutch member of an anti-loosening assembly according to some embodiments of this application;
FIG. 19 is a schematic structural diagram of a lock seat according to some embodiments of this application;
FIG. 20 is a cross-sectional view of a lock seat according to some embodiments of this application;
FIG. 21 is a schematic diagram of connection between a lock seat and a locking mechanism according to some embodiments of this application;
FIG. 22 is a schematic structural diagram of a locking apparatus according to some embodiments of this application; and
FIG. 23 is a cross-sectional view of a locking apparatus according to some embodiments of this application.

Reference signs: 1000: vehicle; 100: battery assembly; 10: locking mechanism; 11: locking member; 111: fixed portion; 112: movable portion; 113: first engaging portion; 1131: first engaging section; 1132: second engaging section; 114: connecting portion; 1141: second limiting portion; 115: second engaging portion; 116: inserting portion; 1161: accommodating cavity; 1162: mounting hole; 117: third engaging portion; 12: adjustment assembly; 121: sleeve; 1211: first limiting portion; 1211a: first groove section; 1211b: second groove section; 1211c: third groove section; 1212: first guiding portion; 1213: engaging surface; 122: adjustment member; 1221: connecting section; 1222: second guiding portion; 1223: guiding inclined surface; 1224: guiding section; 1224a: first circumferential limiting portion; 13: anti-loosening assembly; 131: first clutch member; 1311: first toothed portion; 1312: first inclined surface; 132: second clutch member; 1321: second circumferential limiting portion; 1322: second toothed portion; 1323: second inclined surface; 133: elastic member; 134: stopper; 20: battery; 21: box; 211: first box body; 212: second box body; 22: battery cell; 200: mounting frame; 300: lock seat; 301: lock hole; 302: engaging slot; 303: fixed seat; 3031: accommodating space; 3032: assembly hole; 304: lock seat body; 3041: first surface; 3042: guidance inclined surface; 400: controller; 500: motor; 2000: locking apparatus; X: first direction; and Y: second direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, dimensions such as thickness, length, and width of various components and dimensions such as thickness, length, and width of integrated apparatuses in the embodiments of this application are merely for illustrative purposes and should not constitute any limitations on this application.

In this application, "a plurality of" means more than two (inclusive).

In the embodiments of this application, the battery cell may be a secondary battery, and the secondary battery refers to a battery cell that can be recharged to activate active materials for continuous use after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead storage battery. This is not limited in the embodiments of this application.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent short circuit of the positive electrode and negative electrode and to allow the active ions to pass through.

In some embodiments, the positive electrode can be a positive electrode plate, and the negative electrode can be a negative electrode plate.

In some embodiments, the electrode assembly further includes a separation member, and the separation member is arranged between the positive electrode and the negative electrode.

In some embodiments, the separation member is a separator.

In some embodiments, the battery cell may include a housing. The housing is configured to package the electrode assembly, the electrolyte, and other components. The housing may be steel housing, aluminum housing, plastic housing (for example, polypropylene), composite metal housing (for example, copper-aluminum composite housing), aluminum-plastic film, or the like.

In an example, the battery cell may be a cylindrical battery cell, a prismatic battery cell, a pouch battery cell, or a battery cell of another shape. The prismatic battery cell includes a square shell battery cell, a blade battery cell, and a polygonal battery, such as a hexagonal battery.

The battery mentioned in the embodiments of this application is a single physical module that includes one or more battery cells for providing higher voltage and capacity.

In some embodiments, the battery can be a battery module, and when there are a plurality of battery cells, the plurality of battery cells are arranged and fastened to form a battery module.

In some embodiments, the battery may be a battery pack, the battery pack includes a box and battery cells, and the battery cells or battery modules are accommodated in the box.

With the advancement of technology, new energy vehicles have developed rapidly, and electric vehicles also gain an increasing market share and usage frequency. Electric commercial vehicles in electric vehicles, such as electric heavy trucks and electric light trucks, have gradually appeared in various application scenarios. At the same time, battery swap stations have been built for replacing battery assemblies of electric trucks.

In the field of new energy vehicles, due to the heavy load and long driving range, electric trucks have higher energy consumption than common passenger cars. Therefore, to achieve endurance, electric trucks require frequent battery swap operations. In the battery swap process, the focus is on the locking and separation of the battery mounted on the vehicle. At present, for locking and fixing the battery, the main method is to install a nut on the vehicle and a bolt on the battery and connect the nut and bolt to complete the locking of the battery assembly. However, the locking and separation between the battery and the vehicle require cooperation of the nut on the vehicle and the bolt on the battery. Multiple battery swaps easily cause the nut and the bolt to be stripped. The nut arranged on the vehicle makes it difficult to replace the nut, causing maintenance difficulties. Additionally, since the bolt and nut are directly stressed during battery swap, the service life of the nut and bolt is further reduced, resulting in a short service life and low reliability of the locking mechanism between the battery and the vehicle, and causing inconvenience in battery swap of the electric device and potential safety hazards in use.

In view of this, to solve the technical problems of short service life and low reliability of the locking mechanism between the battery and the vehicle, embodiments of this application provide a locking mechanism configured to engage with or disengage from a lock seat along a first direction. The locking mechanism includes a locking member and an adjustment assembly. Along a second direction, a dimension of the locking member is adjustable to enable the locking member to have a locked state and an unlocked state, the second direction intersecting the first direction. The locking member is configured to engage with the lock seat when in the locked state, to cause the locking mechanism to engage with the lock seat along the first direction; and the locking member is configured to disengage from the lock seat when in the unlocked state, to allow the locking mechanism to disengage from the lock seat along the first direction. The adjustment assembly is connected to the locking member, and the adjustment assembly is capable of adjusting a dimension of a portion of the locking member for cooperating with the lock seat in the second direction, to enable the locking member to switch between the locked state and the unlocked state.

In the locking mechanism with this structure, the locking mechanism is provided with the locking member and the adjustment assembly. The locking member is connected to the adjustment assembly, and the dimension of the locking member in the second direction is adjustable. Through the adjustment assembly, the dimension of the portion of the locking member for cooperating with the lock seat can be adjusted in the second direction, so that the locking member can engage with or disengage from the lock seat in the first direction, enabling the locking mechanism to engage with or disengage from the lock seat in the first direction, thereby implementing locking or unlocking between the locking mechanism and the lock seat. The locking mechanism with this structure is relatively simple in structure, and easy to implement and operate when used in battery swap scenarios, effectively reducing the assembly and operation difficulty of the locking mechanism, thereby helping to improve battery swap efficiency. Moreover, the dimension of the locking member in the second direction is adjusted so that the locking member engages with the lock seat, thereby implementing mutual locking between the locking mechanism and the lock seat. In this way, the structural stability of the mutual locking between the locking mechanism and the lock seat can be improved, to reduce the risk of damage and wear of the locking mechanism during use, helping to improve the reliability and service life of the locking mechanism, greatly reducing the frequency of subsequent maintenance of the locking mechanism, and reducing the usage costs of the locking mechanism.

The locking mechanism disclosed in the embodiments of this application can be used in electric devices such as vehicles, ships, or aircraft, but is not limited to thereto. A power system including the locking mechanism and battery assembly disclosed in this application can be used for the electric device. This helps to alleviate issues such as the short service life and low reliability of the locking mechanism, thereby improving the convenience in battery swap and safety in use of the electric device.

An embodiment of this application provides an electric device that uses a battery assembly as its power source. The electric device may be but is not limited to a mobile phone, a tablet, a laptop computer, an electric toy, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device according to an embodiment of this application being a vehicle 1000 is used as an example for description of the following embodiments.

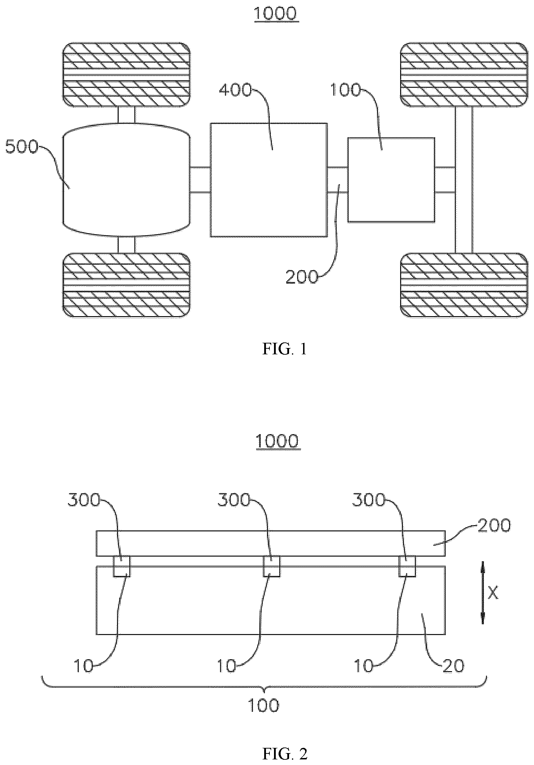

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery assembly 100, and the battery assembly 100 can be arranged at the bottom of the vehicle 1000, at the head of the vehicle 1000, or at the tail of the vehicle 1000.

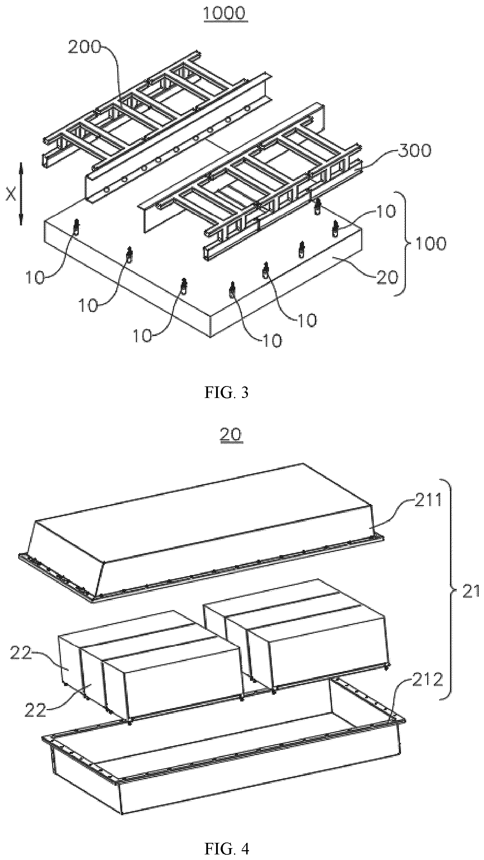

According to some embodiments of this application, referring to FIGs. 2 and 3, FIG. 2 is a partial structural diagram of the vehicle 1000 according to some embodiments of this application, and FIG. 3 is an exploded view of a partial structure of the vehicle 1000 according to some embodiments of this application. The vehicle 1000 has a mounting frame 200 and a lock seat 300, the lock seat 300 is mounted on the mounting frame 200, the battery assembly 100 includes a locking mechanism 10 and a battery 20, the locking mechanism 10 is installed on the battery 20, and the locking mechanism 10 is configured to lock to or unlock from the lock seat 300 to implement battery swap for the vehicle 1000. The battery 20 may be configured to supply power to the vehicle 1000. For example, the battery 20 may serve as an operational power source or a usage power source for the vehicle 1000.

Alternatively, as shown in FIG. 1, the vehicle 1000 may further include a controller 400 and a motor 500. The controller 400 is configured to control the battery 20 to supply power to the motor 500, for example, to satisfy power needs of start, navigation, and driving of the vehicle 1000.

In some embodiments of this application, the battery 20 can be used as not only the operational power source or usage power source for the vehicle 1000 but also a driving power source for the vehicle 1000, replacing or partially replacing fossil fuel or natural gas to provide driving traction for the vehicle 1000.

Referring to FIG. 3, and further referring to FIG. 4, FIG. 4 is an exploded view of a structure of the battery 20 according to some embodiments of this application. The battery 20 may include a box 21 and a battery cell 22, where the battery cell 22 is accommodated in the box 21, and the locking mechanism 10 is mounted on the box 21.

The box 21 is configured to provide an assembly space for the battery cell 22. The box 21 may be of various structures. In some embodiments, the box 21 may include a first box body 211 and a second box body 212, the first box body 211 and the second box body 212 fit together, and the first box body 211 and the second box body 212 jointly define an assembly space for accommodating the battery cell 22. The second box body 212 may be a hollow structure with one end open, and the first box body 211 may be a plate structure. The first box body 211 covers the open side of the second box body 212 so that the first box body 211 and the second box body 212 jointly define the assembly space.

In other embodiments, the first box body 211 and the second box body 212 may both hollow structures with one side open, where the open side of the first box body 211 covers the open side of the second box body 212. Certainly, the box 21 formed by the first box body 211 and the second box body 212 may be of various shapes, for example, cylinder or cuboid. For example, in FIG. 4, the box 21 has a rectangular shape.

In the battery 20, one or more battery cells 22 may be disposed in the box 21. When multiple battery cells 22 are disposed in the box 21, the multiple battery cells 22 may be connected in series, parallel, or series-parallel, where being connected in series-parallel means a combination of series and parallel connections of the multiple battery cells 22. The multiple battery cells 22 may be directly connected in series, parallel, or series-parallel, and then an entirety of the plurality of battery cells 22 is accommodated in the box 21; or certainly, the battery 20 may be formed by multiple battery cells 22 being connected in series, parallel, or series-parallel first to form a battery module and then multiple battery modules being connected in series, parallel, or series-parallel to form an entirety which is accommodated in the box 21. In some embodiments, the battery 20 may also include other structures. For example, the battery 20 may include a busbar component for connecting multiple battery cells 22 to implement electrical connection among the multiple battery cells 22.

Each battery cell 22 may be a secondary battery or a primary battery, or may be a lithium-sulfur battery, a sodium-ion battery, or a magnesium-ion battery, without being limited thereto. The battery cell 22 may be cylindrical, flat, cuboid, or of other shapes. For example, in FIG. 4, the battery cell 22 has a cuboid structure.

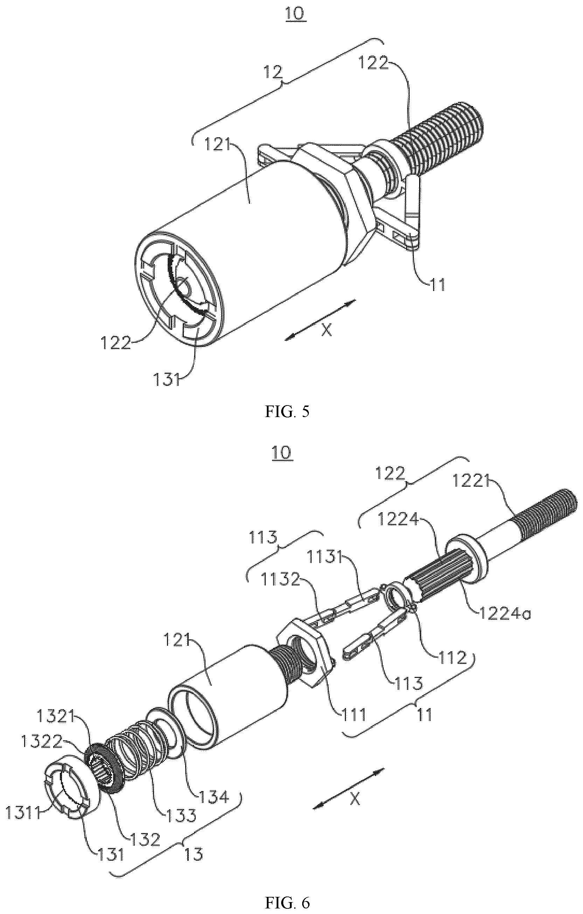

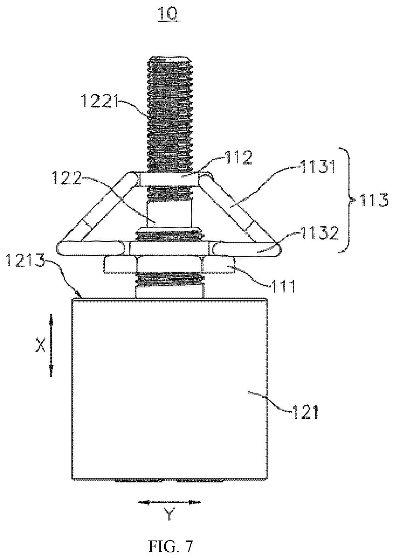

According to some embodiments of this application, referring to FIG. 3 and further referring to FIG. 5, FIG. 6, and FIG. 7, FIG. 5 is a schematic structural diagram of a locking mechanism 10 according to some embodiments of this application, FIG. 6 is an exploded view of a structure of a locking mechanism 10 according to some embodiments of this application, and FIG. 7 is a front view of a locking mechanism 10 according to some embodiments of this application. This application provides a locking mechanism 10 configured to engage with or disengage from the lock seat 300 along a first direction X. The locking mechanism 10 includes a locking member 11 and an adjustment assembly 12. Along a second direction Y, a dimension of the locking member 11 is adjustable to enable the locking member 11 to have a locked state and an unlocked state, the second direction Y intersecting the first direction X. The locking member 11 is configured to engage with the lock seat 300 when in the locked state, to cause the locking mechanism 10 to engage with the lock seat 300 along the first direction X. The locking member 11 is configured to disengage from the lock seat 300 when in the unlocked state, to allow the locking mechanism 10 to disengage from the lock seat 300 along the first direction X. The adjustment assembly 12 is connected to the locking member 11, and the adjustment assembly 12 is capable of adjusting a dimension of a portion of the locking member 11 for cooperating with the lock seat 300 in the second direction Y, to enable the locking member 11 to switch between the locked state and the unlocked state.

Along the second direction Y, the dimension of the locking member 11 is adjustable. To be specific, with the structure in which the dimension of the locking member 11 in the second direction Y is adjustable, after the dimension in the second direction Y is increased, the locking member 11 can engage with the lock seat 300, in which case the locking member 11 is in the locked state; and after the dimension in the second direction Y is decreased, the locking member 11 can disengage from the lock seat 300, in which case the locking member 11 is in the unlocked state, thereby allowing the locking mechanism 10 to engage with or disengage from the lock seat 300 along the first direction X. It should be noted that the dimension of the locking member 11 refers to the dimension of the locking member 11 in the second direction Y, that is, the maximum dimension of the locking member 11 in the second direction Y.

Optionally, the second direction Y is a direction intersecting the first direction X. The second direction Y may be various directions. For example, in FIG. 7, the second direction Y is a direction perpendicular to the first direction X, meaning that the dimension of the locking member 11 is changeable in the direction perpendicular to the first direction X.

It should be noted that there may be various structures in which the dimension of the locking member 11 in the second direction Y is adjustable. For example, the locking member 11 may be an extendable structure in the second direction Y, allowing for a changeable dimension of the locking member 11 in the second direction Y. Certainly, the locking member 11 may alternatively be an irregular structure rotatable around an axis extending in the first direction X, achieving a changeable dimension of the locking member 11 in the second direction Y by rotating the locking member 11.

The adjustment assembly 12 is capable of adjusting the dimension of the portion of the locking member 11 for cooperating with the lock seat 300 in the second direction Y. That is, the dimension of the portion of the locking member 11 for cooperating with the lock seat 300 in the second direction Y can be increased or decreased through the adjustment assembly 12, enabling the locking member 11 to switch between the locked state and the unlocked state. It should be noted that the portion of the locking member 11 for cooperating with the lock seat 300 is the portion of the locking member 11 inserted into the lock seat 300 and cooperating with the lock seat 300.

The locking mechanism 10 is provided with the locking member 11 and the adjustment assembly 12. The locking member 11 is connected to the adjustment assembly 12, and the dimension of the locking member 11 in the second direction Y is adjustable. Through the adjustment assembly 12, the dimension of the portion of the locking member 11 for cooperating with the lock seat 300 can be adjusted in the second direction Y, so that the locking member 11 can engage with or disengage from the lock seat 300 in the first direction X, enabling the locking mechanism 10 to engage with or disengage from the lock seat 300 in the first direction X, thereby implementing locking or unlocking between the locking mechanism 10 and the lock seat 300. The locking mechanism 10 with this structure is relatively simple in structure, and easy to implement and operate when used in battery swap scenarios of the battery 20, effectively reducing the assembly and operation difficulty of the locking mechanism 10, thereby helping to improve battery swap efficiency. Moreover, the dimension of the locking member 11 in the second direction Y is adjusted so that the locking member 11 engages with the lock seat 300, thereby implementing mutual locking between the locking mechanism 10 and the lock seat 300. In this way, the structural stability of the mutual locking between the locking mechanism 10 and the lock seat 300 can be improved, to reduce the risk of damage and wear of the locking mechanism 10 during use, helping to improve the reliability and service life of the locking mechanism 10, greatly reducing the frequency of subsequent maintenance of the locking mechanism 10, and reducing the usage costs of the locking mechanism 10.

In some embodiments, as shown in FIG. 6 and FIG. 7, along the second direction Y, a dimension of the portion of the locking member 11 for cooperating with the lock seat 300 in the locked state is greater than a dimension in the unlocked state.

There may be various structures in which the dimension of the locking member 11 in the second direction Y is adjustable. If the locking member 11 is an extendable structure in the second direction Y, the locking member 11 is a structure that extends when in the locked state, or the locking member 11 is a structure that retracts when in the unlocked state. If the locking member 11 is an irregular structure rotatable around an axis extending in the first direction X, the locking member 11 is a structure that when in the locked state, rotates around the axis extending in the first direction X to where the locking member 11 has the maximum dimension in the second direction Y, or the locking member 11 is a structure that when in the unlocked state, rotates around the axis extending in the first direction X to where the locking member 11 has the minimum dimension in the second direction Y. For example, in FIG. 7, the locking member 11 is an extendable structure in the second direction Y.

The portion of the locking member 11 for cooperating with the lock seat 300 is designed to have a larger dimension in the locked state than in the unlocked state. In this way, engagement or disengagement between the locking member 11 and the lock seat 300 can be implemented by increasing or decreasing the dimension of the portion of the locking member 11 for cooperating with the lock seat 300 in the second direction Y, thereby implementing locking and unlocking of the locking mechanism 10 and the lock seat 300. Such structure is simple and easy to implement.

There may be various structures in which the dimension of the locking member 11 in the second direction Y is adjustable. For example, in some embodiments, as shown in FIG. 7, the locking member 11 includes an engaging portion for engaging with the lock seat 300 (in the embodiments shown in FIG. 6 and FIG. 7, the engaging portion is a first engaging portion 113 of the locking member 11), and the engaging portion is configured to be extendable in the second direction Y. When the locking member 11 is in the locked state, the engaging portion extends in the second direction Y to engage with the lock seat 300; and when the locking member 11 is in the unlocked state, the engaging portion retracts in the second direction Y to disengage from the lock seat 300.

Optionally, there may be various structures in which the dimension of the locking member 11 in the second direction Y is adjustable. For example, in FIG. 7, the locking member 11 includes a first engaging section 1131 and a second engaging section 1132 that are hinged to each other, and a hinge position of the first engaging section 1131 and the second engaging section 1132 is able to expand or retract along the second direction Y. Certainly, in other embodiments, the locking member 11 may alternatively include two parts that are movable with respect to each other, and one of the two parts is capable of moving along the second direction Y relative to the other part, making the locking member 11 extendable along the second direction Y.

With the engaging portion of the locking member 11 arranged as a structure extendable in the second direction Y, the engaging portion of the locking member 11 can expand or retract in the second direction Y to implement engagement or disengagement between the locking member 11 and the lock seat 300, thereby implementing locking and unlocking of the locking mechanism 10 and the lock seat 300. Such structure is simple and easy to implement.

In some embodiments, referring to FIG. 6 and FIG. 7, the adjustment assembly 12 may include a sleeve 121 and an adjustment member 122. In some embodiments, the locking member 11 is disposed on the sleeve 121, the sleeve 121 has an engaging surface 1213 facing the engaging portion in the first direction X, and the engaging surface 1213 is configured to abut against the lock seat 300 when the locking member 11 is in the locked state. The adjustment member 122 is rotatably inserted into the sleeve 121 around an axis extending in the first direction X. The adjustment member 122 is capable of rotating relative to the sleeve 121 to enable the locking member 11 to switch between the locked state and the unlocked state. When the locking member 11 switches from the locked state to the unlocked state, a minimum distance between the engaging portion of the locking member 11 and the engaging surface 1213 in the first direction X remains unchanged.

The minimum distance between the engaging portion of the locking member 11 and the engaging surface 1213 in the first direction X remains unchanged, which means that while the engaging portion of the locking member 11 is extending or retracting along the second direction Y, the distance between the engaging portion of the locking member 11 and the engaging surface 1213 in the first direction X remains unchanged.

The engaging surface 1213 of the sleeve 121 is arranged to be able to abut against the lock seat 300 in the first direction X when the locking member 11 engages with the lock seat 300 and is in the locked state, so that the locking mechanism 10 can clamp the lock seat 300 in the first direction X through the engaging portion of the locking member 11 and the engaging surface 1213 of the sleeve 121. This helps to reduce shaking of the locking mechanism 10 during use, thereby improving the stability of mutual locking between the locking mechanism 10 and the lock seat 300. Additionally, the minimum distance between the engaging portion of the locking member 11 and the engaging surface 1213 of the sleeve 121 for abutting against the lock seat 300 is maintained unchanged in the first direction X, so that the engaging surface 1213 abuts against the lock seat 300 when the locking member 11 engages with the lock seat 300, with no need to adjust the position of the locking member 11 relative to the sleeve 121 in the first direction X. This helps to reduce the structural complexity of the locking mechanism 10.

According to some embodiments of this application, referring to FIG. 5, FIG. 6, and FIG. 7, the adjustment assembly 12 includes a sleeve 121 and an adjustment member 122. The locking member 11 is disposed in the sleeve 121; and the adjustment member 122 is rotatably inserted into the sleeve 121 around an axis extending in the first direction X, and the adjustment member 122 is capable of rotating relative to the sleeve 121 to adjust the dimension of the portion of the locking member 11 for cooperating with the lock seat 300 in the second direction Y.

The sleeve 121 is a hollow structure with two ends open in the first direction X. The sleeve 121 may be made of various materials, such as steel, aluminum, iron, aluminum alloy, or plastic.

The adjustment member 122 is rotatably inserted into the sleeve 121 around the axis extending in the first direction X, and the adjustment member 122 is capable of rotating relative to the sleeve 121 to adjust the dimension of the portion of the locking member 11 for cooperating with the lock seat 300 in the second direction Y. In other words, the adjustment member 122 is capable of rotating relative to the sleeve 121 around the axis extending in the first direction X, so that the dimension of the locking member 11 in the second direction Y can be increased or decreased by rotating the adjustment member 122. Certainly, in some embodiments, the dimension of the locking member 11 in the second direction Y can also be adjusted by moving the adjustment member 122 relative to the sleeve 121.

The adjustment member 122 is used for adjusting the dimension of the locking member 11 in the second direction Y. The adjustment member 122 may be made of various materials, such as steel, aluminum, iron, aluminum alloy, or plastic.

The adjustment assembly 12 is provided with a sleeve 121 and an adjustment member 122 that is rotatably inserted into the sleeve 121 around an axis extending in the first direction X. Through rotation of the adjustment member 122, the dimension of the portion of the locking member 11 for cooperating with the lock seat 300 can be adjusted in the second direction Y, enabling the locking member 11 to engage with or disengage from the lock seat 300. The locking mechanism 10 with this structure is convenient for subsequent operations. The locking or unlocking between the locking mechanism 10 and the lock seat 300 can be implemented simply by rotating the adjustment member 122, helping to improve the operation efficiency and convenience of the locking mechanism 10.

In some embodiments, as shown in FIG. 7, the locking member 11 includes an engaging portion configured to engage with the lock seat 300, where the engaging portion is arranged with the sleeve 121 along the first direction, the sleeve 121 has an engaging surface 1213 facing the engaging portion in the first direction X, and the engaging surface 1213 and the engaging portion are configured to abut against different positions of the lock seat 300 in the first direction X when the locking member 11 is in the locked state.

The locking member 11 of the locking mechanism 10 is configured to be inserted into the lock seat 300 in the first direction X. The engaging surface 1213 of the sleeve 121 is configured to abut against a surface of the lock seat 300 on a side facing the sleeve 121 in the first direction X.

The sleeve 121 is provided with the engaging surface 1213 facing the engaging portion in the first direction X, and the engaging surface 1213 and the engaging portion of the locking member 11 can abut against different positions of the lock seat 300 in the first direction X when the locking member 11 is in the locked state, so that the locking mechanism 10 can clamp the lock seat 300 in the first direction X through the engaging portion of the locking member 11 and the engaging surface 1213 of the sleeve 121. This helps to reduce shaking of the locking mechanism 10 during use, improving the stability and reliability of mutual locking between the locking mechanism 10 and the lock seat 300.

According to some embodiments of this application, as shown in FIG. 6 and FIG. 7, the locking member 11 includes a fixed portion 111, a movable portion 112, and a first engaging portion 113. The fixed portion 111 is fixed to the sleeve 121. The movable portion 112 is connected to the adjustment member 122, the movable portion 112 being spaced from the fixed portion 111 along the first direction X. The first engaging portion 113 connects the movable portion 112 and the fixed portion 111, the first engaging portion 113 being configured to engage with the lock seat 300. The adjustment member 122 is configured to be able to drive, when rotating relative to the sleeve 121, the movable portion 112 to approach or leave the fixed portion 111 along the first direction X, causing the first engaging portion 113 to expand or retract in the second direction Y to adjust the dimension of the locking member 11 in the second direction Y.

The fixed portion 111 is fixed to the sleeve 121, that is, the fixed portion 111 is fastened to the sleeve 121. Optionally, the fixed portion 111 may be fixed to the sleeve 121 through various structures, for example, welding, bonding, engagement, or bolting. For example, in FIG. 6 and FIG. 7, the fixed portion 111 is threadedly connected to the sleeve 121, and the fixed portion 111 is arranged at an end of the sleeve 121 in the first direction X.

The movable portion 112 is connected to the adjustment member 122, and the movable portion 112 is capable of moving relative to the fixed portion 111 along the first direction X, enabling the movable portion 112 to approach or leave the fixed portion 111 in the first direction X.

The first engaging portion 113 functions to connect the movable portion 112 and the fixed portion 111, so that the first engaging portion 113 is connected between the movable portion 112 and the fixed portion 111. The first engaging portion 113 can expand or retract in the second direction Y, thereby implementing dimension adjustment of the locking member 11 in the second direction Y. Therefore, when the first engaging portion 113 expands in the second direction Y, the first engaging portion 113 can engage with the lock seat 300, in which case the locking member 11 is in the locked state; and when the first engaging portion 113 retracts in the second direction Y, the first engaging portion 113 can disengage from the lock seat 300, in which case the locking member 11 is in the unlocked state.

The adjustment member 122 is configured to be able to drive, when rotating relative to the sleeve 121, the movable portion 112 to approach or leave the fixed portion 111 along the first direction X, causing the first engaging portion 113 to expand or retract in the second direction Y. That is, through rotation of the adjustment member 122, the movable portion 112 can be driven to move along the first direction X, causing the movable portion 112 to approach or leave the fixed portion 111. In this way, when the movable portion 112 and the fixed portion 111 approach each other, the first engaging portion 113 connected between the movable portion 112 and the fixed portion 111 can expand in the second direction Y; or when the movable portion 112 and the fixed portion 111 leave each other, the first engaging portion 113 connected between the movable portion 112 and the fixed portion 111 can retract in the second direction Y.

The adjustment member 122 can drive, when rotating relative to the sleeve 121, the movable portion 112 to move along the first direction X. The adjustment member 122 and the movable portion 112 may be connected through various structures. For example, the connection structure between the adjustment member 122 and the movable portion 112 can be a threaded connection, so that the adjustment member 122 can provide a feeding force to the movable portion 112 in the first direction X when rotating, enabling the movable portion 112 to move along the first direction X. Certainly, the connection structure between the adjustment member 122 and the movable portion 112 may alternatively be a rod-and-sleeve structure, that is, the adjustment member 122 is a screw rod, and the movable portion 112 is a screw rod sleeve sleeving the adjustment member 122. For example, in FIG. 7, the movable portion 112 fits around an outer side of the adjustment member 122, and a connection between the movable portion 112 and the adjustment member 122 is a threaded connection, that is, an external thread is provided on an outer peripheral surface of the adjustment member 122, and an internal thread is provided on an inner peripheral surface of the movable portion 112.

Optionally, the first engaging portion 113 may be of various structures. For example, the first engaging portion 113 may be a spring member or a "V"-shaped hinge structure connected between the movable portion 112 and the fixed portion 111.

The locking member 11 is provided with the fixed portion 111, the movable portion 112, and the first engaging portion 113 connecting the fixed portion 111 and the movable portion 112. The fixed portion 111 is fixed to the sleeve 121, and the movable portion 112 is movably disposed on the fixed portion 111 along the first direction X, so that the adjustment member 122 is able to drive, when rotating, the movable portion 112 to approach or leave the fixed portion 111 along the first direction X, causing the first engaging portion 113 connecting the fixed portion 111 and the movable portion 112 to expand or retract in the second direction Y. In this way, the first engaging portion 113 can engage with or disengage from the lock seat 300, implementing the engagement or disengagement between the locking mechanism 10 and the lock seat 300 in the first direction X.

In some embodiments, still referring to FIG. 6 and FIG. 7, the first engaging portion 113 includes a first engaging section 1131 and a second engaging section 1132 that are hinged to each other, where an end of the first engaging section 1131 far from the second engaging section 1132 is hinged to the movable portion 112, and an end of the second engaging section 1132 far from the first engaging section 1131 is hinged to the fixed portion 111.

The first engaging portion 113 is a structure of a first engaging section 1131 and a second engaging section 1132 that are hinged to each other, and the first engaging section 1131 and the second engaging section 1132 are respectively hinged to the movable portion 112 and the fixed portion 111, making the first engaging portion 113 a "V"-shaped hinge structure connected between the movable portion 112 and the fixed portion 111. In this way, when the movable portion 112 and the fixed portion 111 approach or leave each other in the first direction X, the hinge position of the first engaging section 1131 and the movable portion 112 and the hinged position of the second engaging section 1132 and the fixed portion 111 can approach or leave each other in the first direction X, so that the first engaging section 1131 and the second engaging section 1132 can expand or retract in the second direction Y by adjusting the included angle between the first engaging section 1131 and the second engaging section 1132.

The first engaging portion 113 is provided with the first engaging section 1131 and the second engaging section 1132 that are hinged to each other, and the first engaging section 1131 and the second engaging section 1132 are respectively hinged to the movable portion 112 and the fixed portion 111. In this way, when the movable portion 112 and the fixed portion 111 approach or leave each other in the first direction X, the included angle between the first engaging section 1131 and the second engaging section 1132 can be adjusted, so that the hinge position of the first engaging section 1131 and the second engaging section 1132 can move in the second direction Y, allowing the first engaging portion 113 to expand or retract in the second direction Y. Such structure is simple and easy to implement.

According to some embodiments of this application, as shown in FIG. 7, the locking member 11 includes two first engaging portions 113, and the two first engaging portions 113 are disposed on two sides of the movable portion 112 along the second direction Y.

The locking member 11 includes two first engaging portions 113, and the two first engaging portions 113 are respectively connected to two sides of the fixed portion 111 along the second direction Y, so that when the movable portion 112 and the fixed portion 111 approach or leave each other in the first direction X, along the second direction Y, the two first engaging portions 113 can be driven to expand in a direction in which they leave each other or to retract in a direction in which they approach each other.

It should be noted that in some embodiments, the first engaging portions 113 of the locking member 11 may alternatively be provided in other quantities, such as three, four, or five. When the locking member 11 has more than two first engaging portions 113, the multiple first engaging portions 113 are spaced apart along a circumferential direction of the fixed portion 111, and at least one of the multiple first engaging portions 113 can expand or retract in the second direction Y.

The locking member 11 is provided with two first engaging portions 113, and the two first engaging portions 113 are arranged on two sides of the movable portion 112 along the second direction Y, so that the two first engaging portions 113 can expand or retract on the two sides of the movable portion 112, respectively, further expanding the dimension adjustment range of the locking member 11 in the second direction Y. This helps to improve the stability and reliability of mutual engagement between the locking member 11 and the lock seat 300, thereby effectively enhancing the stability and reliability of mutual locking between the locking mechanism 10 and the lock seat 300.

According to some embodiments of this application, as shown in FIG. 6 and FIG. 7, the adjustment member 122 includes a connecting section 1221 extending out of the sleeve 121 in the first direction X, the movable portion 112 fits around an outer side of the connecting section 1221, and the movable portion 112 is threadedly connected to the connecting section 1221.

The adjustment member 122 is inserted into the sleeve 121 in the first direction X, so that the adjustment member 122 has a portion inserted into the sleeve 121 and a portion not inserted into the sleeve 121. The connecting section 1221 is the portion of the adjustment member 122 not inserted into the sleeve 121, that is, the connecting section 1221 is the portion of the adjustment member 122 extending out of the sleeve 121 in the first direction X.

The movable portion 112 fits around the outer side of the connecting section 1221, and the movable portion 112 is threadedly connected to the connecting section 1221, meaning that the movable portion 112 is threadedly connected to the outer side of the connecting section 1221. In other words, the movable portion 112 fits around the outer side of the connecting section 1221, and the internal thread is provided on the inner peripheral surface of the movable portion 112, and correspondingly, the external thread is provided on the outer peripheral surface of the connecting section 1221, making the movable portion 112 and the connecting section 1221 threadedly connected structures.

The adjustment member 122 has the connecting section 1221 extending out of the sleeve 121 in the first direction X, and the movable portion 112 is threadedly connected to the outer side of the connecting section 1221. Since the movable portion 112 is connected to the fixed portion 111 through the first engaging portion 113, and the fixed portion 111 is fixed to the sleeve 121, the movable portion 112 and the sleeve 121 form a circumferentially locked structure, so that when the adjustment member 122 rotates relative to the sleeve 121, the movable portion 112 can move in the first direction X under the action of the threads, allowing the movable portion 112 to drive the first engaging portion 113 to expand or retract in the second direction Y. Such structure is simple, and a self-locking structure is formed between the movable portion 112 and the adjustment member 122 to mitigate the phenomenon of the movable portion 112 slipping relative to the adjustment member 122 in the first direction X, thereby improving the reliability of mutual locking between the locking mechanism 10 and the lock seat 300.

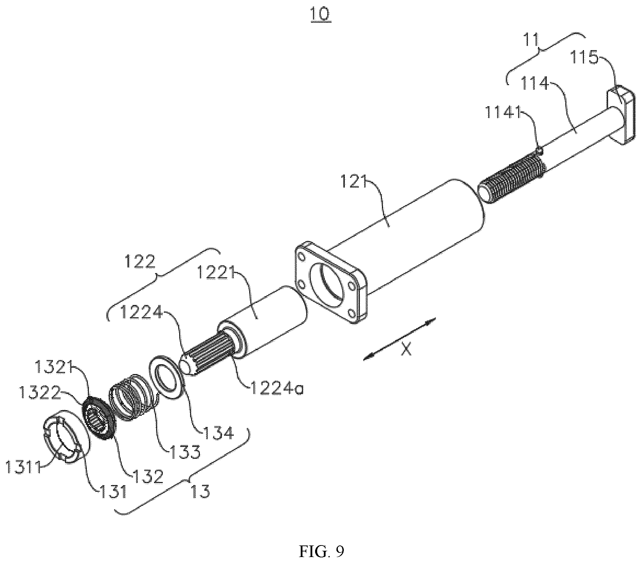

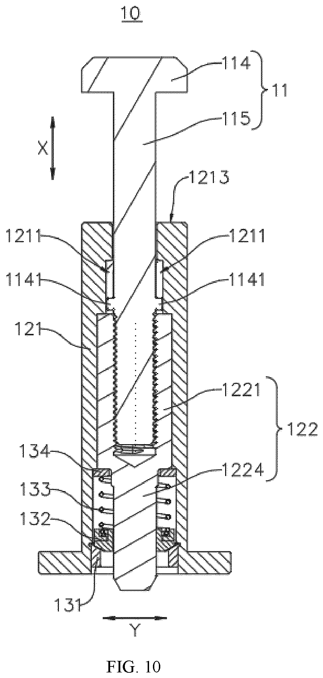

According to some embodiments of this application, referring to FIG. 8, FIG. 9, and FIG. 10, FIG. 8 is a schematic structural diagram of a locking mechanism 10 according to some other embodiments of this application, FIG. 9 is an exploded view of a structure of a locking mechanism 10 according to some other embodiments of this application, and FIG. 10 is a cross-sectional view of a locking mechanism 10 according to some other embodiments of this application. The locking member 11 includes a connecting portion 114 and a second engaging portion 115. The connecting portion 114 extends in the first direction X and is connected to the adjustment member 122, and the connecting portion 114 is inserted into the sleeve 121. The second engaging portion 115 is located outside the sleeve 121 and is connected to an end of the connecting portion 114 far from the adjustment member 122. The second engaging portion 115 protrudes from an outer peripheral surface of the connecting portion 114 along an extending direction of the second engaging portion 115. The second engaging portion 115 is configured to engage with the lock seat 300. The adjustment member 122 is configured to be able to drive rotation of the connecting portion 114 when rotating relative to the sleeve 121, so that the extending direction of the second engaging portion 115 deviates from or aligns with the second direction Y, to adjust the dimension of the locking member 11 in the second direction Y.

In the embodiments shown in FIG. 9 and FIG. 10, the engaging portion of the locking member 11 is the second engaging portion 115. The connecting portion 114 of the locking member 11 is a cylindrical structure extending in the first direction X, with a portion of the connecting portion 114 inserted into the sleeve 121 in the first direction X. The portion of the connecting portion 114 inserted into the sleeve 121 is connected to the adjustment member 122, so that the adjustment member 122 can drive the connecting portion 114 to rotate around an axis extending in the first direction X.

The second engaging portion 115 is located outside the sleeve 121 and is connected to an end of the connecting portion 114 far from the adjustment member 122. That is, the connecting portion 114 has a portion not inserted into the sleeve 121, and the second engaging portion 115 is connected to an end of the portion of the connecting portion 114 not inserted into the sleeve 121, so that the second engaging portion 115 is spaced from the sleeve 121 along the first direction X.

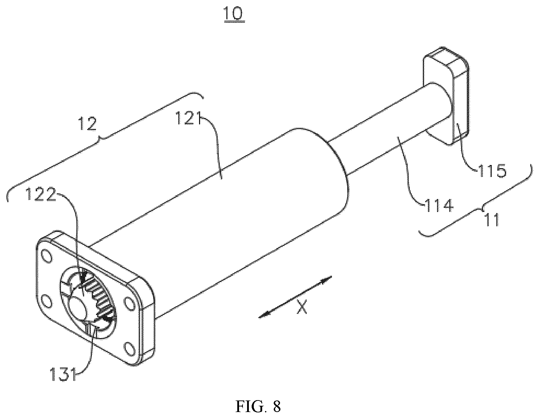

The second engaging portion 115 protrudes from the outer peripheral surface of the connecting portion 114 along the extending direction of the second engaging portion 115. That is, in the extending direction of the second engaging portion 115, the second engaging portion 115 extends out of the outer peripheral surface of the connecting portion 114. For example, in FIG. 8, the extending direction of the second engaging portion 115 is perpendicular to the first direction X, so that the second engaging portion 115 and the connecting portion 114 form a "T"-shaped structure. Certainly, in other embodiments, the second engaging portion 115 and the connecting portion 114 may alternatively be a "L"-shaped structure.

The adjustment member 122 is configured to be able to drive rotation of the connecting portion 114 when rotating relative to the sleeve 121, so that the extending direction of the second engaging portion 115 deviates from or aligns with the second direction Y, to adjust the dimension of the locking member 11 in the second direction Y. That is, when the adjustment member 122 rotates relative to the sleeve 121, the connecting portion 114 drives the second engaging portion 115 to rotate around an axis extending in the first direction X, so that the extending direction of the second engaging portion 115 can coincide with or deviate from the second direction Y. When the extending direction of the second engaging portion 115 aligns with the second direction Y, the second engaging portion 115 has a maximum dimension in the second direction Y, so that the second engaging portion 115 can engage with the lock seat 300. When the extending direction of the second engaging portion 115 deviates from the second direction Y, the second engaging portion 115 has a decreasing dimension in the second direction Y, so that the second engaging portion 115 can disengage from the lock seat 300. When the extending direction of the second engaging portion 115 is perpendicular to the second direction Y, the second engaging portion 115 has a smallest dimension in the second direction Y, so that the dimension of the second engaging portion 115 in the second direction Y can be adjusted by using the adjustment member 122 to drive the second engaging portion 115 to rotate. In this way, the dimension of the locking member 11 in the second direction Y can be adjusted, so that when the extending direction of the second engaging portion 115 of the locking member 11 aligns with the second direction Y, the locking member 11 is in the locked state; and correspondingly, when the extending direction of the second engaging portion 115 of the locking member 11 deviates from the second direction Y, the locking member 11 is in the unlocked state.

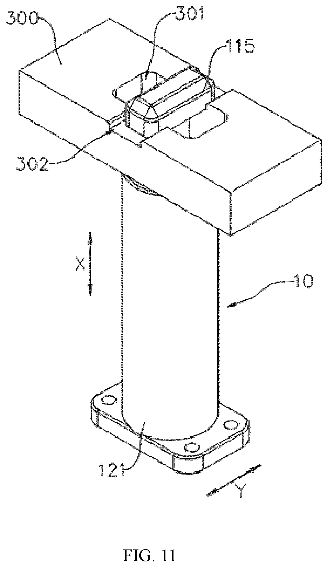

For example, referring to FIG. 11, FIG. 11 is a schematic diagram of connection between the locking mechanism 10 and the lock seat 300 according to some other embodiments of this application. The lock seat 300 is provided with a lock hole 301 for insertion of the locking member 11. After the locking member 11 is inserted into the lock hole 301, when the extending direction of the second engaging portion 115 of the locking member 11 aligns with the second direction Y, the locking member 11 is in the locked state, and the second engaging portion 115 of the locking member 11 can engage with the lock seat 300 in the first direction X; and when the extending direction of the second engaging portion 115 of the locking member 11 is perpendicular to the second direction Y, the locking member 11 is in the unlocked state, and the second engaging portion 115 of the locking member 11 can exit from the lock hole 301 and disengage from the lock seat 300.

The lock seat 300 is further provided with an engaging slot 302 on a surface for engagement with the second engaging portion 115. When the extending direction of the second engaging portion 115 of the locking member 11 aligns with the second direction Y, the locking member 11 is in the locked state, and the second engaging portion 115 of the locking member 11 can be engaged in the engaging slot 302, to alleviate the shaking between the locking mechanism 10 and the lock seat 300, thereby improving the stability of mutual locking between the locking mechanism 10 and the lock seat 300.

The locking member 11 is provided with the connecting portion 114 and the second engaging portion 115 connected to an end of the connecting portion 114, and the second engaging portion 115 protrudes from the outer peripheral surface of the connecting portion 114 along the extending direction of the second engaging portion 115. With the connecting portion 114 inserted in the sleeve 121 along the first direction and connected to the adjustment member 122, the adjustment member 122 is able to drive, when rotating, the connecting portion 114 to rotate, so that the second engaging portion 115 can rotate along with the connecting portion 114, making the extending direction of the second engaging portion 115 deviate from the second direction Y or align with the second direction Y, that is, enabling the second engaging portion 115 to rotate to align with the second direction Y or causing the second engaging portion 115 to deviate from the second direction Y. This allows the second engaging portion 115 to engage with or disengage from the lock seat 300 after rotation, so as to adjust the dimension of the locking member 11 in the second direction Y, allowing the locking mechanism 10 to engage with or disengage from the lock seat 300 in the first direction X.

In some embodiments, an angle of rotation of the connecting portion 114 relative to the sleeve 121 when the locking member 11 switches from the unlocked state to the locked state is α, satisfying 0° < α < 180°. In other words, driven by the adjustment member 122, the connecting portion 114 rotates around the axis extending along the first direction X at an angle greater than 0 degrees and less than 180 degrees.

The angle of rotation of the connecting portion 114 is set to be greater than 0 degrees and less than 180 degrees when the locking member 11 switches from the unlocked state to the locked state, so that the dimension of the locking member 11 in the second direction Y can be adjusted when the second engaging portion 115 rotates with the connecting portion 114 by a small angle greater than 0 degrees, allowing the second engaging portion 115 to engage with the lock seat 300. This can also alleviate the phenomenon that the second engaging portion 115 rotates with the connecting portion 114 to become parallel to the second engaging portion 115 when the locking member 11 is in the unlocked state, thereby reducing the risk of the second engaging portion 115 being unable to engage with the lock seat 300, and improving the reliability of mutual locking between the locking mechanism 10 and the lock seat 300.

According to some embodiments of this application, as shown in FIG. 9 and FIG. 10, the sleeve 121 is provided with a first limiting portion 1211, and the connecting portion 114 is provided with a second limiting portion 1141. The first limiting portion 1211 and the second limiting portion 1141 cooperate to limit the angle of rotation of the connecting portion 114.

The first limiting portion 1211 and the second limiting portion 1141 cooperate to limit the angle of rotation of the connecting portion 114 relative to the sleeve 121. The first limiting portion 1211 and the second limiting portion 1141 may be of various structures. For example, the first limiting portion 1211 may be a limiting groove disposed on the inner peripheral surface of the sleeve 121, and correspondingly, the second limiting portion 1141 may be a protrusion disposed on the outer peripheral surface of the connecting portion 114, and the protrusion is inserted into the limiting groove to cooperate in limiting the angle of rotation of the connecting portion 114. Certainly, the first limiting portion 1211 and the second limiting portion 1141 may both be protrusions, with the first limiting portion 1211 protruding from an end of the sleeve 121 in the first direction X, and the second limiting portion 1141 protruding from the outer peripheral surface of the connecting portion 114. The second limiting portion 1141 can abut against the first limiting portion 1211 when the connecting portion 114 rotates relative to the sleeve 121, thereby limiting the angle of rotation of the connecting portion 114 through the cooperation of the first limiting portion 1211 and the second limiting portion 1141.

Optionally, the first limiting portion 1211 and the second limiting portion 1141 each may be provided in one or plurality. For example, in the embodiments of this application, two first limiting portions 1211 are provided, and correspondingly, two second limiting portions 1141 are provided, the two second limiting portions 1141 being respectively disposed on two sides of the connecting portion 114 along the second direction Y.

With the first limiting portion 1211 and the second limiting portion 1141 correspondingly disposed on the sleeve 121 and the connecting portion 114, the first limiting portion 1211 and the second limiting portion 1141 can cooperate to limit the angle of rotation of the connecting portion 114, so that the connecting portion 114 can drive the second engaging portion 115 to engage with or disengage from the lock seat 300 under the limiting cooperation of the first limiting portion 1211 and the second limiting portion 1141, thereby facilitating the switching of the locking member 11 between the locked state and the unlocked state. The structure is simple and easy to operate, and can alleviate the phenomenon that the second engaging portion 115 cannot engage with the lock seat 300 due to the second engaging portion 115 rotating with the connecting portion 114 by an excessively large angle.

According to some embodiments of this application, as shown in FIG. 10 and FIG. 11, the first limiting portion 1211 and the second limiting portion 1141 are configured to cooperate, when the adjustment member 122 rotates relative to the sleeve 121, to guide the connecting portion 114 to move along the first direction X, so that the second engaging portion 115 moves between a first position and a second position along the first direction X. When the second engaging portion 115 is in the first position, an extending direction of the second engaging portion 115 aligns with the second direction Y, so that the second engaging portion 115 can engage with the lock seat 300. When the second engaging portion 115 is in the second position, the extending direction of the second engaging portion 115 deviates from the second direction Y, so that the second engaging portion 115 can disengage from the lock seat 300.

The first limiting portion 1211 and the second limiting portion 1141 are configured to cooperate, when the adjustment member 122 rotates relative to the sleeve 121, to guide the connecting portion 114 to move along the first direction X. That is, during the process of the adjustment member 122 driving the connecting portion 114 to rotate relative to the sleeve 121, the first limiting portion 1211 and the second limiting portion 1141 limit the angle of rotation of the connecting portion 114, and also guide the connecting portion 114 to move relative to the sleeve 121 in the first direction X, so that the connecting portion 114 has two end positions, the first position and the second position, relative to the sleeve 121 in the first direction X. That is, when the adjustment member 122 drives the connecting portion 114 to rotate relative to the sleeve 121, the connecting portion 114 can also move relative to the sleeve 121 in the first direction X, so that when the connecting portion 114 drives the second engaging portion 115 to rotate to align the extending direction of the second engaging portion 114 with the second direction Y, the connecting portion 114 is in the first position. Correspondingly, when the connecting portion 114 moves to the second position, the extending direction of the second engaging portion 115 is perpendicular to the second direction Y.

When rotating relative to the sleeve 121, the adjustment member 122 can drive the connecting portion 114 to rotate, and can also drive the connecting portion 114 to move along the first direction X. The adjustment member 122 and the connecting portion 114 may be connected through various structures. For example, the connection structure between the adjustment member 122 and the connecting portion 114 can be a threaded connection, so that the adjustment member 122 can drive the connecting portion 114 to rotate, and when the circumferential rotation of the connecting portion 114 is limited, the adjustment member 122 provides a feeding force to the connecting portion 114 in the first direction X, enabling the connecting portion 114 to move along the first direction X. Certainly, the connection structure between the adjustment member 122 and the connecting portion 114 may alternatively be a rod-and-sleeve structure, that is, the adjustment member 122 is a screw rod, and the connecting portion 114 is a screw rod sleeve sleeving the adjustment member 122. For example, in FIG. 10, the adjustment member 122 fits around the outer side of the connecting portion 114, and the connection between the connecting portion 114 and the adjustment member 122 is a threaded connection. That is, an internal thread is provided on the inner peripheral surface of the adjustment member 122, and an external thread is correspondingly provided on the outer peripheral surface of the connecting portion 114.

It should be noted that the dimension of the portion protruding from the sleeve 121 when the connecting portion 114 is in the first position is smaller than the dimension of the portion protruding from the sleeve 121 when the connecting portion 114 is in the second position. That is, when the connecting portion 114 moves from the first position to the second position, the second engaging portion 115 moves away from the sleeve 121 in the first direction X. As shown in FIG. 11, after the locking member 11 is inserted into the lock hole 301 of the lock seat 300, the adjustment member 122 drives the connecting portion 114 to rotate, and causes the connecting portion 114 to move from the second position to the first position. Then, the second engaging portion 115 can rotate to align the extending direction of the second engaging portion 115 with the second direction Y, and the second engaging portion 115 can be engaged in the engaging slot 302 of the lock seat 300, implementing locking between the locking mechanism 10 and the lock seat 300. On the contrary, the adjustment member 122 drives the connecting portion 114 to rotate, and causes the connecting portion 114 to move from the first position to the second position. Then, the second engaging portion 115 can rotate to make the extending direction of the second engaging portion 115 perpendicular to the second direction Y, and the second engaging portion 115 exits from the engaging slot 302 of the lock seat 300 and moves away from the lock seat 300, to enable the locking member 11 of the locking mechanism 10 to exit from the lock hole 301 of the lock seat 300, implementing unlocking between the locking mechanism 10 and the lock seat 300.

While limiting the angle of rotation of the connecting portion 114, the first limiting portion 1211 and the second limiting portion 1141 cooperate in guiding the connecting portion 114 to move relative to the sleeve 121 in the first direction X, so that the adjustment member 122 can drive the connecting portion 114 to move along the first direction X while driving the connecting portion 114 to rotate relative to the sleeve 121. This allows the adjustment member 122 to drive the second engaging portion 115 to engage with the lock seat 300, as well as driving the second engaging portion 115 to abut against the lock seat 300, so as to reduce the gap size between the second engaging portion 115 and the lock seat 300, thereby reducing the vibration between the locking mechanism 10 and the lock seat 300.

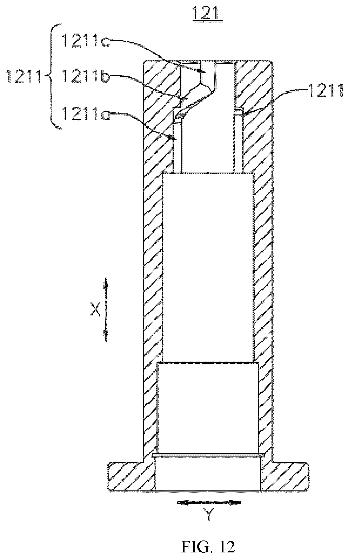

According to some embodiments of this application, referring to FIG. 9 and FIG. 10, and further referring to FIG. 12, FIG. 12 is a cross-sectional view of a sleeve 121 of a locking mechanism 10 according to some other embodiments of this application. The first limiting portion 1211 is a limiting groove disposed on an inner peripheral surface of the sleeve 121, the second limiting portion 1141 is a protrusion disposed on the outer peripheral surface of the connecting portion 114, and the protrusion is accommodated in the limiting groove.

The first limiting portion 1211 is a limiting groove, and the second limiting portion 1141 is a protrusion. With the protrusion inserted into the limiting groove, the movement track of the protrusion is restricted and guided by the limiting groove, so that the connecting portion 114 can be limited in its angle of rotation and move between the first position and the second position along the first direction X under the cooperation of the first limiting portion 1211 and the second limiting portion 1141.

It should be noted that in other embodiments, the first limiting portion 1211 and the second limiting portion 1141 may alternatively be other structures. For example, the first limiting portion 1211 is a protrusion disposed on the inner peripheral surface of the sleeve 121, and correspondingly, the second limiting portion 1141 is a limiting groove disposed on the outer peripheral surface of the connecting portion 114.

The first limiting portion 1211 and the second limiting portion 1141 are respectively a limiting groove disposed on the sleeve 121 and a protrusion disposed on the connecting portion 114. With the protrusion inserted into the limiting groove, the protrusion can limit the angle of rotation of the connecting portion 114 under the restriction of the limiting groove, and the protrusion can cause, under the guidance of the limiting groove, the connecting portion 114 to rotate relative to the sleeve 121 and move relative to the sleeve 121 along the first direction X. Such structure is simple, easy to implement, and highly stable.

In some embodiments, as shown in FIG. 12, the limiting groove includes a first groove section 1211a, a second groove section 1211b, and a third groove section 1211c sequentially connected. The first groove section 1211a and the third groove section 1211c both extend in the first direction X, and the first groove section 1211a and the third groove section 1211c are spaced apart along a circumferential direction of the connecting portion 114, and the first groove section 1211a and the third groove section 1211c are spaced apart along the first direction X. In the first direction X, the third groove section 1211c is closer to the second engaging portion 115 than the first groove section 1211a. When the second engaging portion 115 is in the first position, the protrusion is in the first groove section 1211a. When the second engaging portion 115 is in the second position, the protrusion is in the third groove section 1211c.

The first groove section 1211a and the third groove section 1211c are spaced apart along the circumferential direction of the connecting portion 114, and the first groove section 1211a and the third groove section 1211c are spaced apart along the first direction X, that is, a distance exists between the first groove section 1211a and the third groove section 1211c of the limiting groove in the first direction X, and a distance also exists in the circumferential direction of the connecting portion 114. It should be noted that because the first groove section 1211a and the third groove section 1211c are spaced apart in both the first direction X and the circumferential direction of the connecting portion 114, the second groove section 1211b that connects the first groove section 1211a and the third groove section 1211c is a spiral structure surrounding the connecting portion 114. In this way, when the protrusion is in the first groove section 1211a and the third groove section 1211c, the connecting portion 114 can be driven by the adjustment member 122 to move only in the first direction X; and when the protrusion is in the second groove section 1211b, the connecting portion 114 can be driven by the adjustment member 122 to move in the first direction X and rotate around an axis extending in the first direction X.

When the second engaging portion 115 is in the first position, the protrusion is in the first groove section 1211a; and when the second engaging portion 115 is in the second position, the protrusion is in the third groove section 1211c. That is, when the protrusion of the connecting portion 114 moves from the first groove section 1211a to the third groove section 1211c, the connecting portion 114 can move from the first position to the second position.

Certainly, the structure of the limiting groove is not limited there. In some embodiments, the limiting groove may alternatively be of other structures. For example, the limiting groove is a structure that extends along the first direction X and has a great width in the circumferential direction of the connecting portion 114, so that the limiting groove has two groove sidewalls opposite in the circumferential direction of the connecting portion 114. The two groove sidewalls are spaced apart in the circumferential direction of the connecting portion 114, and the two groove sidewalls are both configured for the protrusion to abut against. The protrusion is inserted in the limiting groove, and the protrusion can move between the two groove sidewalls along the circumferential direction of the connecting portion 114 to limit the angle of rotation of the connecting portion 114. When the protrusion abuts against the groove sidewall of the limiting groove, the groove sidewall of the limiting groove can block the rotation of the connecting portion 114 to limit the angle of rotation of the connecting portion 114. Additionally, after blocked by the groove sidewall of the limiting groove, the protrusion of the connecting portion 114 can move along the first direction X under the guidance of the groove sidewall of the limiting groove, so that the connecting portion 114 can move along the first direction X.

Both the first groove section 1211a and the third groove section 1211c of the limiting groove are arranged as structures extending in the first direction X, and the first groove section 1211a and the third groove section 1211c are spaced apart from each other in both the first direction X and the circumferential direction of the connecting portion 114, making the second groove section 1211b a helical groove connecting the first groove section 1211a and the third groove section 1211c. In this way, when the protrusion of the connecting portion 114 is in the first groove section 1211a and the third groove section 1211c, it can only follow the extending direction of the first groove section 1211a and the second groove section 1211c to move in the first direction X; and when the protrusion of the connecting portion 114 is in the second groove section 1211b, it can follow the extending direction of the second groove section 1211b to rotate relative to the sleeve 121 and move relative to the sleeve 121 along the first direction X, thereby limiting the angle of rotation of the connecting portion 114 and allowing movement between the first position and the second position along the first direction X. In addition, with the third groove section 1211c disposed closer to the second engaging portion 115 than the first groove section 1211a in the first direction X, when the protrusion is in the first groove section 1211a, the second engaging portion 115 can engage with the lock seat 300 and be closer to the sleeve 121, enabling the second engaging portion 115 to abut against the lock seat 300 in the first direction X.

According to some embodiments of this application, as shown in FIG. 9 and FIG. 10, the adjustment member 122 has a connecting section 1221, the connecting section 1221 fits around an outer side of the connecting portion 114, and the connecting section 1221 is threadedly connected to the connecting portion 114.

The connecting portion 114 has a port inserted into the sleeve 121 in the first direction X, and the adjustment member 122 is inserted in the sleeve 121 along the first direction X, and the adjustment member 122 fits around an outer side of the portion of the connecting portion 114 inserted into the sleeve 121.

The connecting section 1221 fits around the outer side of the connecting portion 114, and the connecting section 1221 is threadedly connected to the connecting portion 114, that is, the connecting section 1221 of the adjustment member 122 is threadedly connected to the outer side of the connecting portion 114. In other words, the adjustment member 122 fits around the outer side of the connecting portion 114, an internal thread is provided on the inner peripheral surface of the adjustment member 122, and correspondingly, an external thread is provided on the outer peripheral surface of the connecting portion 114, making the connecting portion 114 and the connecting section 1221 threadedly connected structures. Certainly, in other embodiments, the connecting section 1221 of the adjustment member 122 and the connecting portion 114 may alternatively be the connecting portion 114 being threadedly connected to the outer side of the connecting section 1221 of the adjustment member 122.

The adjustment member 122 is provided with the connecting section 1221, and the connecting section 1221 is threadedly connected to the outer side of the connecting portion 114, so that rotation of the adjustment member 122 can drive the connecting portion 114 to rotate together, and when the rotation of the connecting portion 114 is circumferentially limited, the adjustment member 122 can provide a feed force to the connecting portion 114 along the first direction X, enabling the connecting portion 114 to move along the first direction X. Such structure is simple and easy to implement, and a self-locking structure is formed between the connecting portion 114 and the adjustment member 122, to mitigate the phenomenon of the connecting portion 114 slipping relative to the adjustment member 122 in the first direction X, thereby improving the reliability of mutual locking between the locking mechanism 10 and the lock seat 300.

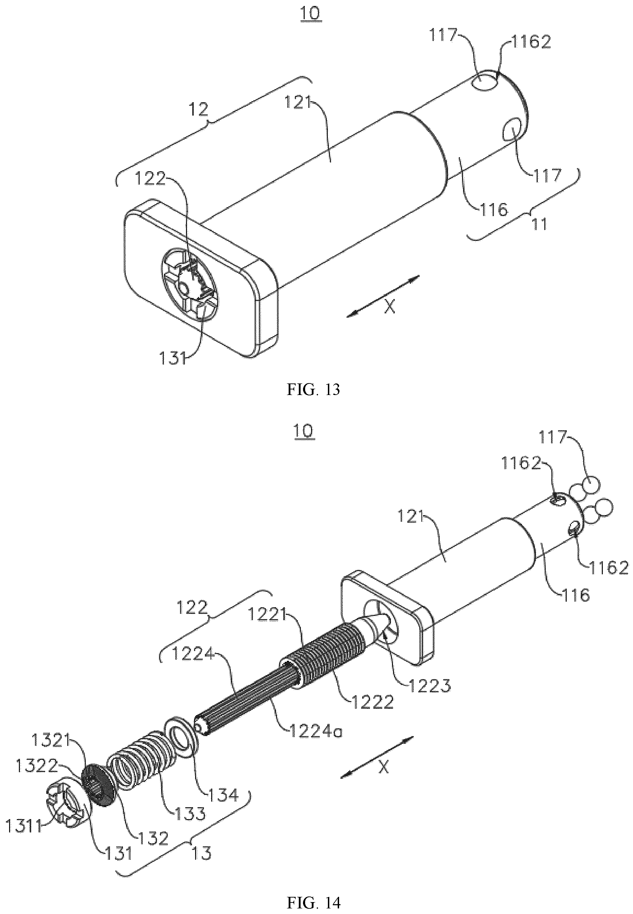

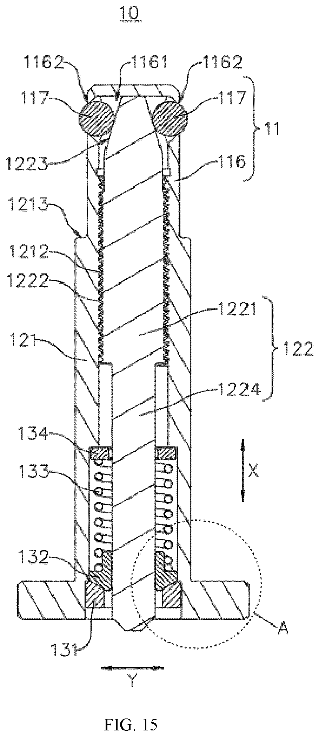

According to some embodiments of this application, referring to FIG. 13, FIG. 14, and FIG. 15, FIG. 13 is a schematic structural diagram of a locking mechanism 10 according to still some other embodiments of this application, FIG. 14 is an exploded view of a structure of a locking mechanism 10 according to still some other embodiments of this application, and FIG. 15 is a cross-sectional view of a locking mechanism 10 according to still some other embodiments of this application. The sleeve 121 is provided with a first guiding portion 1212, and the adjustment member 122 is provided with a second guiding portion 1222. The first guiding portion 1212 and the second guiding portion 1222 are configured to cooperate, when the adjustment member 122 rotates relative to the sleeve 121, to guide the adjustment member 122 to move along the first direction X, to adjust the dimension of the locking member 11 in the second direction Y.

The adjustment member 122 is inserted into the sleeve 121 in the first direction X, and the adjustment member 122 can move relative to the sleeve 121 along the first direction X when rotating relative to the sleeve 121 under the guiding cooperation of the first guiding portion 1212 and the second guiding portion 1222, that is, the adjustment member 122 can move along the first direction X relative to the sleeve 121 in the process of rotating relative to the sleeve 121, thereby adjusting the dimension of the locking member 11 in the second direction Y by moving the adjustment member 122.

Optionally, the first guiding portion 1212 and the second guiding portion 1222 may be of multiple structures. For example, the first guiding portion 1212 may be an internal thread provided on the inner peripheral surface of the sleeve 121, and correspondingly, the second guiding portion 1222 may be an external thread provided on the outer peripheral surface of the adjustment member 122, that is, there is a threaded connection structure between the adjustment member 122 and the sleeve 121, enabling the adjustment member 122 to move relative to the sleeve 121 along the first direction X while rotating relative to the sleeve 121. Certainly, in some embodiments, the adjustment member 122 and the sleeve 121 may alternatively be of other structures. For example, the connection structure between the adjustment member 122 and the sleeve 121 may alternatively be a rod-and-sleeve structure, that is, the adjustment member 122 is a screw rod, and the sleeve 121 is a screw rod sleeve sleeving the adjustment member 122. In other words, the first guiding portion 1212 and the second guiding portion 1222 are screw rod threads respectively provided on the sleeve 121 and the adjustment member 122.

With the first guiding portion 1212 and the second guiding portion 1222 respectively disposed on the sleeve 121 and the adjustment member 122, the adjustment member 122 can rotate relative to the sleeve 121 and move relative to the sleeve 121 along the first direction X under the guiding cooperation of the first guiding portion 1212 and the second guiding portion 1222, so as to adjust the dimension of the locking member 11 in the second direction Y by moving the adjustment member 122, thereby enabling the locking mechanism 10 to engage with or disengage from the lock seat 300 in the first direction X.

In some embodiments, as shown in FIG. 14 and FIG. 15, the first guiding portion 1212 is an internal thread provided on the inner peripheral surface of the sleeve 121, and the second guiding portion 1222 is an external thread provided on the outer peripheral surface of the adjustment member 122. That is, the sleeve 121 sleeves the adjustment member 122, and there is a threaded connection structure between the sleeve 121 and the adjustment member 122, so that the adjustment member 122 can move relative to the sleeve 121 along the first direction X under the guidance of the threaded structure when rotating relative to the sleeve 121.

The adjustment member 122 has a connecting section 1221 inserted into the sleeve 121 and connected to the sleeve 121, and the second guiding portion 1222 is an external thread provided on an outer peripheral surface of the connecting section 1221.

The first guiding portion 1212 and the second guiding portion 1222 are respectively an internal thread provided on the inner peripheral surface of the sleeve 121 and an external thread provided on the outer peripheral surface of the adjustment member 122, that is, the adjustment member 122 is threadedly connected to the sleeve 121. This structure enables the adjustment member 122 to rotate relative to the sleeve 121 and move relative to the sleeve 121 along the first direction X. Such structure is simple and easy to implement, and a self-locking structure is formed between the adjustment member 122 and the sleeve 121, to mitigate the phenomenon of the adjustment member 122 slipping relative to the sleeve 121 in the first direction X, thereby improving the reliability of mutual locking between the locking mechanism 10 and the lock seat 300.

According to some embodiments of this application, as shown in FIG. 13, FIG. 14, and FIG. 15, the locking member 11 includes an inserting portion 116 and a third engaging portion 117. The inserting portion 116 is connected to an end of the sleeve 121 in the first direction X. The third engaging portion 117 is movably disposed in the inserting portion 116, and the third engaging portion 117 is configured to engage with the lock seat 300. The adjustment member 122 is configured to, when moving relative to the sleeve 121 along the first direction X, drive the third engaging portion 117 to protrude from an outer peripheral surface of the inserting portion 116 or allow the third engaging portion 117 to retract into the inserting portion 116, to adjust the dimension of the locking member 11 in the second direction Y.

In the embodiments shown in FIG. 14 and FIG. 15, the engaging portion of the locking member 11 is the third engaging portion 117. The inserting portion 116 is configured to be inserted into the lock seat 300, so that the third engaging portion 117 disposed on the inserting portion 116 can engage with or disengage from the lock seat 300, thereby implementing locking or unlocking between the locking mechanism 10 and the lock seat 300.

The inserting portion 116 is connected to an end of the sleeve 121 in the first direction X, that is, the inserting portion 116 and the sleeve 121 are arranged in the first direction X, and the inserting portion 116 and the sleeve 121 are connected to each other.

For example, in FIG. 15, the inserting portion 116 of the locking member 11 and the sleeve 121 are an integrally formed structure. That is, the inserting portion 116 of the locking member 11 and the sleeve 121 are made using an integral forming process such as casting or injection molding, making the inserting portion 116 of the locking member 11 and the sleeve 121 an integrated structure. Certainly, in other embodiments, the inserting portion 116 of the locking member 11 and the sleeve 121 may alternatively be separate structures, and the inserting portion 116 of the locking member 11 may be connected to an end of the sleeve 121 in the first direction X through bolting, welding, engagement, or other structures.

The adjustment member 122 is configured to, when moving relative to the sleeve 121 along the first direction X, drive the third engaging portion 117 to protrude from the outer peripheral surface of the inserting portion 116 or allow the third engaging portion 117 to retract into the inserting portion 116, to adjust the dimension of the locking member 11 in the second direction Y. That is, the third engaging portion 117 is movably disposed on the inserting portion 116, and the adjustment member 122, when moving relative to the sleeve 121 along the first direction X, can push the third engaging portion 117 to protrude from the outer peripheral surface of the inserting portion 116, or allow the third engaging portion 117 to retract into the inserting portion 116 under the action of an external force, thereby increasing the dimension of the locking member 11 in the second direction Y or decreasing the dimension of the locking member 11 in the second direction Y through the third engaging portion 117. To be specific, when the third engaging portion 117 protrudes from the outer peripheral surface of the inserting portion 116, the dimension of the locking member 11 in the second direction Y can be increased; and when the third engaging portion 117 retracts into the inserting portion 116, the dimension of the locking member 11 in the second direction Y can be decreased, allowing the dimension of the locking member 11 in the second direction Y to be adjusted.

For example, the third engaging portion 117 is movably disposed on the inserting portion 116 along the second direction Y, and the adjustment member 122 can be used to push the third engaging portion 117 to move relative to the inserting portion 116 along the second direction Y, enabling the third engaging portion 117 to protrude from the outer peripheral surface of the inserting portion 116.

It should be noted that as shown in FIG. 15, when the adjustment member 122 moves towards the inserting portion 116 along the in the direction, the adjustment member 122 can push the third engaging portion 117 to move relative to the inserting portion 116 and protrude from the outer peripheral surface of the inserting portion 116, implementing mutual engagement between the locking member 11 and the lock seat 300. When the adjustment member 122 moves away from the inserting portion 116 along the first direction X, the adjustment member 122 can release the third engaging portion 117, allowing the third engaging portion 117 to retract into the inserting portion 116, and implementing disengagement between the locking member 11 and the lock seat 300.

The locking member 11 is provided with the inserting portion 116 and the third engaging portion 117. The inserting portion 116 is connected to the end of the sleeve 121 in the first direction X, and the third engaging portion 117 is movably disposed on the inserting portion 116, so that the adjustment member 122, when moving relative to the sleeve 121 along the first direction X, can drive the third engaging portion 117 to protrude from the outer peripheral surface of the inserting portion 116, or allow the third engaging portion 117 to retract into the inserting portion 116, enabling the third engaging portion 117 to engage with or disengage from the lock seat 300, thereby adjusting the dimension of the locking member 11 in the second direction Y, and enabling the locking mechanism 10 to engage with or disengage from the lock seat 300 in the first direction X.

In some embodiments, as shown in FIG. 15, an accommodating cavity 1161 communicating with the interior of the sleeve 121 is formed inside the inserting portion 116, the adjustment member 122 being inserted into the accommodating cavity 1161 along the first direction X; and a mounting hole 1162 is disposed on the outer peripheral surface of the inserting portion 116, the mounting hole 1162 communicating with the accommodating cavity 1161, and the third engaging portion 117 being movably disposed in the mounting hole 1162.

The accommodating cavity 1161 communicating with the inside of the sleeve 121 is formed inside the inserting portion 116, so that the adjustment member 122 inserted in the sleeve 121 can move along the first direction X and is inserted in the accommodating cavity 1161 of the inserting portion 116. In this way, when moving toward the inserting portion 116 along the first direction X, the adjustment member 122 can push the third engaging portion 117 disposed in the mounting hole 1162 to move relative to the inserting portion 116, so that the third engaging portion 117 can protrude from the outer peripheral surface of the inserting portion 116.

The accommodating cavity 1161 for insertion of the adjustment member 122 is formed inside the inserting portion 116, and the mounting hole 1162 communicating with the accommodating cavity 1161 is disposed on the outer peripheral surface of the inserting portion 116. The third engaging portion 117 is movably disposed in the mounting hole 1162, so that the adjustment member 122 can push, when moving relative to the inserting portion 116 along the first direction X inside the accommodating cavity 1161, the third engaging portion 117 to protrude from the outer peripheral surface of the inserting portion 116, to enable the third engaging portion 117 to engage with the lock seat 300; or allow the third engaging portion 117 to retract into the inserting portion 116, to enable the third engaging portion 117 to disengage from the lock seat 300.

According to some embodiments of this application, as shown in FIG. 14 and FIG. 15, along the first direction X, a guiding inclined surface 1223 is formed at an end of the adjustment member 122 close to the inserting portion 116. The guiding inclined surface 1223 is configured to abut against the third engaging portion 117 and push the third engaging portion 117 to protrude from the outer peripheral surface of the inserting portion 116.

For example, the end of the adjustment member 122 close to the inserting portion 116 is of a conical structure, so that a conical surface is formed at the end of the adjustment member 122 close to the inserting portion 116. The conical surface is the guiding inclined plane 1223, so that when the adjustment member 122 moves toward the inserting portion 116 along the first direction X, the third engaging portion 117 can protrude from the outer peripheral surface of the inserting portion 116 under the push of the guiding inclined surface 1223.

The guiding inclined surface 1223 for the third engaging portion 117 to abut against is provided at the end of the adjustment member 122 close to the inserting portion 116, so that the third engaging portion 117 can protrude from the outer peripheral surface of the inserting portion 116 under the guidance of the guiding inclined surface 1223 when the adjustment member 122 moves in the first direction X, allowing the adjustment member 122 to drive the third engaging portion 117 to protrude from the outer peripheral surface of the inserting portion 116 or allowing the third engaging portion 117 to retract into the inserting portion 116. Therefore, the locking mechanism 10 with this structure can reduce the occurrence of mutual jamming between the adjustment member 122 and the third engaging portion 117.

According to some embodiments of this application, as shown in FIG. 13, FIG. 14, and FIG. 15, the locking member 11 includes multiple third engaging portions 117. The plurality of third engaging portions 117 are arranged around the adjustment member 122, and at least one third engaging portion 117 is movably disposed on the inserting portion 116 along the second direction Y.

For example, the locking member 11 is provided with four third engaging portions 117, the four third engaging portions 117 are spaced apart along the circumferential direction of the inserting portion 116, and two of the four third engaging portions 117 are arranged opposite each other on two sides of the adjustment member 122 along the second direction Y. Certainly, in other embodiments, the third engaging portions 117 may be provided in other quantities, such as two, three, five, or six.

The locking member 11 is provided with multiple third engaging portions 117, the multiple third engaging portions 117 are disposed around the adjustment member 122, and at least one of the third engaging portions 117 is movably disposed in the inserting portion 116 along the second direction Y. This enables all the multiple third engaging portions 117 to protrude from the outer peripheral surface of the inserting portion 116 under the drive of the adjustment member 122, so that the dimension of the locking member 11 in the second direction Y as well as in other directions perpendicular to the first direction can be adjusted. This helps to improve the stability and reliability of mutual engagement between the locking member 11 and the lock seat 300, thereby effectively enhancing the stability and reliability of mutual locking between the locking mechanism 10 and the lock seat 300.

In some embodiments, the third engaging portion 117 is spherical. That is, the third engaging portion 117 is of a spherical structure. Certainly, in other embodiments, the third engaging portion 117 may alternatively be of a cube structure, a cuboid structure, a conical structure, or the like.

The third engaging portion 117 is arranged as a spherical structure, so that the adjustment member 122, when moving relative to the sleeve 121 along the first direction X, can push the third engaging portion 117 to protrude from the outer peripheral surface of the inserting portion 116 or allow the third engaging portion 117 to retract into the inserting portion 116, thereby reducing the mutual jamming between the adjustment member 122 and the third engaging portion 117.

According to some embodiments of this application, as shown in FIG. 14 and FIG. 15, the locking mechanism 10 may further include an anti-loosening assembly 13. The anti-loosening assembly 13 is disposed between the sleeve 121 and the adjustment member 122, and the anti-loosening assembly 13 is configured to selectively lock the adjustment member 122 to the sleeve 121, to limit the adjustment member 122 to rotate relative to the sleeve 121.

The anti-loosening assembly 13 is configured to selectively lock the adjustment member 122 to the sleeve 121, to limit the adjustment member 122 to rotate relative to the sleeve 121. That is, the anti-loosening assembly 13 can selectively lock or unlock the adjustment member 122 and the sleeve 121. When the anti-loosening assembly 13 locks the adjustment member 122 to the sleeve 121, the adjustment member 122 cannot rotate relative to the sleeve 121; and when the anti-loosening assembly 13 unlocks the adjustment member 122 from the sleeve 121, the adjustment member 122 can rotate relative to the sleeve 121.

The locking mechanism 10 is further provided with the anti-loosening assembly 13. The anti-loosening assembly 13 is disposed between the sleeve 121 and the adjustment member 122 so that the adjustment member 122 can be selectively locked to the sleeve 121. That is, when the anti-loosening assembly 13 releases the sleeve 121 and the adjustment member 122, the anti-loosening assembly 13 allows the adjustment member 122 to rotate relative to the sleeve 121 so as to adjust the dimension of the locking member 11 in the second direction Y; and when the anti-loosening assembly 13 locks the sleeve 121 and the adjustment member 122, the anti-loosening assembly 13 can limit the adjustment member 122 to rotate relative to the sleeve 121, thereby alleviating the phenomenon of poor engagement between the locking member 11 and the lock seat 300 caused by accidental rotation of the adjustment member 122, improving the locking effect between the locking member 11 and the lock seat 300, and enhancing the stability and reliability of mutual locking between the locking mechanism 10 and the lock seat 300.

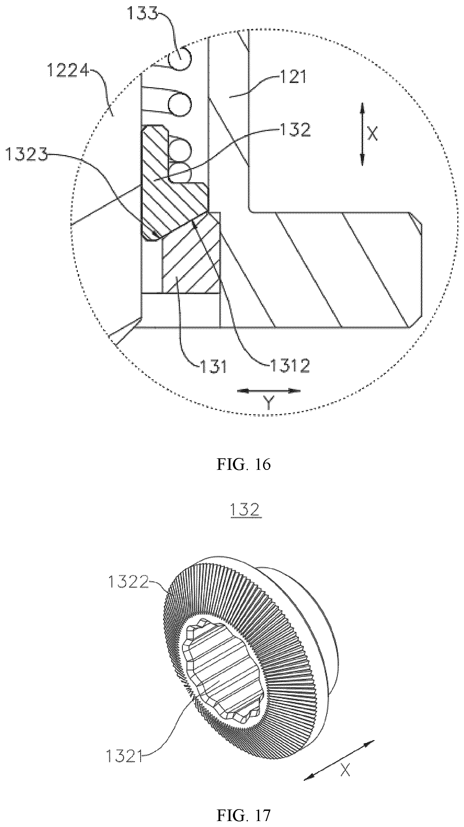

In some embodiments, referring to FIG. 14 and FIG. 15, and further referring to FIG. 16, FIG. 16 is a partial enlarged view of point A of the locking mechanism 10 shown in FIG. 15. The anti-loosening assembly 13 includes a first clutch member 131 and a second clutch member 132. The first clutch member 131 is disposed on the sleeve 121, and the second clutch member 132 is disposed on the adjustment member 122. The first clutch member 131 and the second clutch member 132 are configured to: when engaged with each other, limit the adjustment member 122 to rotate relative to the sleeve 121; and when disengaged from each other, allow the adjustment member 122 to rotate relative to the sleeve 121.

When engaged with each other, the first clutch member 131 and the second clutch member 132 can limit the adjustment member 122 to rotate relative to the sleeve 121; and when disengaged from each other, the first clutch member 131 and the second clutch member 132 can allow the adjustment member 122 to rotate relative to the sleeve 121. Optionally, the first clutch member 131 and the second clutch member 132 may be of multiple structures. For example, the first clutch member 131 may be fixed on an inner side of the sleeve 121, and the second clutch member 132 movably fits around the outer side of the adjustment member 122 along the first direction X and is circumferentially locked with the adjustment member 122. That is, the second clutch member 132 can move relative to the adjustment member 122 along the first direction X, but cannot rotate circumferentially relative to the adjustment member 122, so that when the second clutch member 132 moves along the first direction X to be engaged with the first clutch member 131, the first clutch member 131 and the second clutch member 132 can cooperate in limiting the adjustment member 122 to rotate relative to the sleeve 121; and when the first clutch member 131 and the second clutch member 132 disengage from each other, the adjustment member 122 is allowed to rotate relative to the sleeve 121. Certainly, the first clutch member 131 may alternatively be a structure that is movably disposed in the sleeve 121 along the first direction X and is circumferentially locked with the sleeve 121, and correspondingly, the second clutch member 132 fixedly fits around the outer side of the adjustment member 122.

Certainly, the structure of the anti-loosening assembly 13 is not limited thereto. In other embodiments, the anti-loosening assembly 13 may be of other structures. For example, the anti-loosening assembly 13 may be a bolt threadedly connected to the sleeve 121. When the bolt is tightened, the bolt can abut against the adjustment member 122 to limit the adjustment member 122 to rotate relative to the sleeve 121; and when the bolt is loosened, the bolt can be separated from the adjustment member 122 so as to allow the adjustment member 122 to rotate relative to the sleeve 121, enabling the anti-loosening assembly 13 to selectively lock the adjustment member 122 and the sleeve 121.

The anti-loosening assembly 13 is provided with the first clutch member 131 and the second clutch member 132 that can engage with and disengage from each other, and the first clutch member 131 and the second clutch member 132 are respectively disposed on the sleeve 121 and the adjustment member 122, so that rotation of the adjustment member 122 relative to the sleeve 121 can be limited through engagement cooperation between the first clutch member 131 and the second clutch member 132. Additionally, when the first clutch member 131 and the second clutch member 132 disengage from each other, the adjustment member 122 can rotate relative to the sleeve 121. In this way, the anti-loosening assembly 13 can selectively lock the adjustment member 122 and the sleeve 121.

In some embodiments, as shown in FIG. 14, FIG. 15, and FIG. 16, the first clutch member 131 and the second clutch member 132 are arranged in the first direction X. The first clutch member 131 is fixed on the sleeve 121, the second clutch member 132 is circumferentially locked with the adjustment member 122, and the second clutch member 132 is movably disposed on the adjustment member 122 along the first direction X, so that the second clutch member 132 can engage with or disengage from the first clutch member 131.

The first clutch member 131 is fixed on the inner side of the sleeve 121, and the first clutch member 131 and the sleeve 121 may be fixedly connected through various structures. For example, the first clutch member 131 may be fixedly connected to the sleeve 121 by welding, bonding, engagement, or other structures.

The second clutch member 132 and the adjustment member 122 are circumferentially locked, and the second clutch member 132 is movably disposed on the adjustment member 122 along the first direction X, that is, the second clutch member 132 can move relative to the adjustment member 122 along the first direction X but cannot rotate relative to the adjustment member 122, so that the second clutch member 132 can engage with or disengage from the first clutch member 131 when moving along the first direction X.

For example, the second clutch member 132 fits around the outer side of the adjustment member 122.

The first clutch member 131 and the second clutch member 132 are arranged along the first direction X, and the second clutch member 132 is movably disposed on the adjustment member 122 along the first direction X. The first clutch member 131 is fixed to the sleeve 121, and the second clutch member 132 is arranged as a structure circumferentially locked with the adjustment member 122, so that the engagement or disengagement between the second clutch member 132 and the first clutch member 131 can be implemented by moving the second clutch member 132, so as to limit the adjustment member 122 to rotate relative to the sleeve 121 or allow the adjustment member 122 to rotate relative to the sleeve 121. The anti-loosening assembly 13 with this structure is simple in structure and easy to operate and implement.

According to some embodiments of this application, referring to FIG. 14, FIG. 15, and FIG. 16, and further referring to FIG. 17, FIG. 17 is a cross-sectional view of a second clutch member 132 of an anti-loosening assembly 13 according to some embodiments of this application. The adjustment member 122 includes a guiding section 1224 inserted in the sleeve 121, where the second clutch member 132 movably fits around the guiding section 1224 along the first direction X, a first circumferential limiting portion 1224a is disposed on an outer peripheral surface of the guiding section 1224, a second circumferential limiting portion 1321 is disposed on an inner peripheral surface of the second clutch member 132, and the second circumferential limiting portion 1321 and the first circumferential limiting portion 1224a cooperate to circumferentially lock the second clutch member 132 to the adjustment member 122.

The first clutch member 131 is fixed in the sleeve 121 and disposed around the adjustment member 122, and the second clutch member 132 movably fits around the outer side of the guiding section 1224 of the adjustment member 122 along the first direction X, so that the second clutch member 132 can move relative to the adjustment member 122 along the first direction X, enabling the second clutch member 132 to engage with or disengage from the first clutch member 131.

The first circumferential limiting portion 1224a is disposed on an outer peripheral surface of the guiding section 1224, and the second circumferential limiting portion 1321 is disposed on an inner peripheral surface of the second clutch member 132. The first circumferential limiting portion 1224a and the second circumferential limiting portion 1321 cooperate to limit the circumferential rotation of the second clutch member 132 relative to the adjustment member 122, so that when the second clutch member 132 and the first clutch member 131 engage with each other, the first clutch member 131 can limit the rotation of the second clutch member 132 relative to the sleeve 121, further limiting the rotation of the adjustment member 122 relative to the sleeve 121.

Optionally, the first circumferential limiting portion 1224a and the second circumferential limiting portion 1321 may be of various structures. For example, the first circumferential limiting portion 1224a may be a projection on the outer peripheral surface of the guiding section 1224 of the adjustment member 122, and the projection is a structure extending along the first direction X. Correspondingly, the second circumferential limiting portion 1321 is a guiding groove disposed on the inner peripheral surface of the second clutch member 132, and the guiding groove extends along the first direction X. The projection is engaged in the guiding groove, so that the second clutch member 132 can move relative to the guiding section 1224 of the adjustment member 122 along the first direction X and is circumferentially locked with the guiding section 1224 of the adjustment member 122. Certainly, the first circumferential limiting portion 1224a may alternatively be a guiding groove disposed on the outer peripheral surface of the guiding section 1224 of the adjustment member 122, and correspondingly, the second circumferential limiting portion 1321 is a projection disposed on the inner peripheral surface of the second clutch member 132.

The adjustment member 122 has the guiding section 1224, and the second clutch member 132 movably fits around the outer side of the guiding section 1224 along the first direction X. The first circumferential limiting portion 1224a is disposed on the outer peripheral surface of the guiding section 1224, and the second circumferential limiting portion 1321 cooperating with the first circumferential limiting portion 1224a is correspondingly disposed on the inner peripheral surface of the second clutch member 132, so that the second clutch member 132 can move relative to the adjustment member 122 along the first direction X and is circumferentially locked.

In some embodiments, the first circumferential limiting portion 1224a is a spline extending in the first direction X, and the second circumferential limiting portion 1321 is a spline groove cooperating with the spline.

The first circumferential limiting portion 1224a and the second circumferential limiting portion 1321 are arranged as a spline and a spline groove extending in the first direction X, that is, the spline extending in the first direction X is disposed on the outer peripheral surface of the guiding section 1224 of the adjustment member 122, and the spline groove cooperating with the spline is disposed on the inner peripheral surface of the second clutch member 132, so that the second clutch member 132 can be circumferentially locked to the adjustment member 122, but can move relative to the adjustment member 122 along the first direction X. Such structure is simple and highly stable.

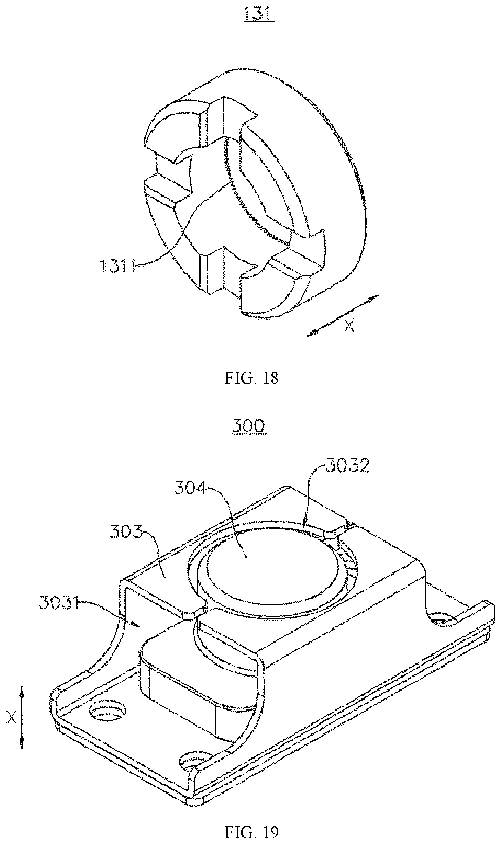

According to some embodiments of this application, referring to FIG. 14 and FIG. 17 and further referring to FIG. 18, FIG. 18 is a schematic diagram of a structure of a first clutch member 131 of an anti-loosening assembly 13 according to some embodiments of this application. Along the first direction X, a first toothed portion 1311 is provided at an end of the first clutch member 131 facing the second clutch member 132, and a second toothed portion 1322 is provided at an end of the second clutch member 132 facing the first clutch member 131, where the second toothed portion 1322 is configured to mesh with the first toothed portion 1311 to implement engagement between the second clutch member 132 and the first clutch member 131.

The first toothed portion 1311 is a tooth structure disposed on an end of the first clutch member 131 facing the second clutch member 132, and multiple teeth of the first toothed portion 1311 are arranged along a circumferential direction of the first clutch member 131, each tooth extending radially along the first clutch member 131. The second toothed portion 1322 is a tooth structure disposed on an end of the second clutch member 132 facing the first clutch member 131, and multiple teeth of the second toothed portion 1322 are arranged along a circumferential direction of the second clutch member 132, each tooth extending radially along the second clutch member 132. In this way, when the second clutch member 132 moves toward the first clutch member 131 along the first direction X, the second toothed portion 1322 and the first toothed portion 1311 can mesh with each other, so that the second clutch member 132 engage with the first clutch member 131, so as to limit the rotation of the adjustment member 122 relative to the sleeve 121.

It should be noted that in other embodiments, the first clutch member 131 and the second clutch member 132 may alternatively be of other structures. For example, the first clutch member 131 is provided with a limiting hole at an end facing the second clutch member 132 in the first direction X, and the second clutch member 132 is provided with a bolt at an end facing the first clutch member 131 in the first direction X. When the second clutch member 132 moves toward the first clutch member 131 along the first direction X, the bolt can be inserted in the limiting hole, so that the second clutch member 132 engage with the first clutch member 131, thereby limiting rotation of the adjustment member 122 relative to the sleeve 121.

The first toothed portion 1311 is disposed at an end of the first clutch member 131 facing the second clutch member 132, and correspondingly, the second toothed portion 1322 is disposed at an end of the second clutch member 132 facing the first clutch member 131, so that when the second clutch member 132 moves in the first direction X, the second toothed portion 1322 can be meshed with or detached from the first toothed portion 1311, enabling the second clutch member 132 to engage with or disengage from the first clutch member 131. In this way, when the first toothed portion 1311 and the second toothed portion 1322 mesh with each other, the first clutch member 131 and the second clutch member 132 can cooperate in limiting rotation of the adjustment member 122 relative to the sleeve 121. Such structure is simple and easy to implement. In addition, the first toothed portion 1311 and the second toothed portion 1322 are respectively disposed on the first clutch member 131 and the second clutch member 132, which can reduce the difficulty of engagement and disengagement between the first clutch member 131 and the second clutch member 132, facilitating engagement or disengagement between the first clutch member 131 and the second clutch member 132.

According to some embodiments, as shown in FIG. 16, along the first direction X, a first inclined surface 1312 is formed at an end of the first clutch member 131 facing the second clutch member 132, and a second inclined surface 1323 is formed at an end of the second clutch member 132 facing the first clutch member 131, the second inclined surface 1323 fitting with the first inclined surface 1312. The first toothed portion 1311 is provided on the first inclined surface 1312, and the second toothed portion 1322 is provided on the second inclined surface 1323.

The second inclined surface 1323 fits with the first inclined surface 1312, that is, the first inclined surface 1312 provided on the first clutch member 131 and the second inclined surface 1323 provided on the second clutch member 132 are the same in shape, enabling the first inclined surface 1312 to be attached to the second inclined surface 1323.

The first toothed portion 1311 is provided on the first inclined surface 1312, and the second toothed portion 1322 is provided on the second inclined surface 1323. That is, the first toothed portion 1311 is protrudingly disposed on the first inclined surface 1312, and the second toothed portion 1322 is protrudingly disposed on the second inclined surface 1323.

The first inclined surface 1312 is disposed at the end of the first clutch member 131 facing the second clutch member 132, the first toothed portion 1311 being provided on the first inclined surface 1312, and correspondingly, the second inclined surface 1323 that fits with the first inclined surface 1312 is disposed at the end of the second clutch member 132 facing the first clutch member 131, the second toothed portion 1322 being provided on the second inclined surface 1323. In this structure, the first toothed portion 1311 and the second toothed portion 1322 are inclined structures that fit with each other, thereby providing a certain guiding function for the first toothed portion 1311 and the second toothed portion 1322 to mesh with each other.

In some embodiments, as shown in FIG. 16, FIG. 17, and FIG. 18, the first inclined surface 1312 is a concave surface provided on the first clutch member 131, and the second inclined surface 1323 is a convex surface provided on the second clutch member 132.

The first inclined surface 1312 is a concave surface provided on the first clutch member 131, that is, the first inclined surface 1312 is an inwardly recessed inclined surface provided at an end of the first clutch member 131 facing the second clutch member 132, so that the first inclined surface 1312 is a conical surface recessed toward the inside of the first clutch member 131.

The second inclined surface 1323 is a convex surface provided on the second clutch member 132, that is, the second inclined surface 1323 is an outwardly protruding inclined surface provided at an end of the second clutch member 132 facing the first clutch member 131, so that the second inclined surface 1323 is a conical surface protruding toward the outside of the second clutch member 132.

The first inclined surface 1312 is arranged as a concave surface and the second inclined surface 1323 is arranged as a convex surface, so that the second clutch member 132 can be inserted into the first clutch member 131 when the second toothed portion 1322 of the second clutch member 132 meshes with the first toothed portion 1311 of the first clutch member 131, which helps to improve the stability and reliability of the engagement between the second clutch member 132 and the first clutch member 131, thereby reducing the occurrence of slippage during the engagement between the second clutch member 132 and the first clutch member 131.

According to some embodiments of this application, as shown in FIG. 14, FIG. 15, and FIG. 16, the anti-loosening assembly 13 may further include an elastic member 133. The elastic member 133 is disposed between the sleeve 121 and the second clutch member 132. The elastic member 133 is configured to drive the second clutch member 132 to move toward the first clutch member 131, so as to cause the second clutch member 132 to engage with the first clutch member 131.

The elastic member 133 is disposed between the sleeve 121 and the second clutch member 132, so that the elastic member 133 can provide an elastic force for the second clutch member 132, making the second clutch member 132 tend to move toward the first clutch member 131 in the first direction X. Therefore, during actual use, the adjustment member 122 can be driven to rotate relative to the sleeve 121 simply by pushing the second clutch member 132 to disengage, so that the locking member 11 can switch between the locked state and the unlocked. After the state switching of the locking member 11 is completed, the force for pushing the second clutch member 132 needs to be cancelled so that the second clutch member 132 approaches and engages with the first clutch member 131 under the elastic force of the elastic member 133, thereby limiting rotation of the adjustment member 122 relative to the sleeve 121.

Optionally, the elastic member 133 may be of various structures. For example, the elastic member 133 may be a spring, a spring sheet, an elastic rubber, or the like disposed on between the sleeve 121 and the second clutch member 132. For example, in FIG. 14 and FIG. 15, the elastic member 133 is a spring, the spring sleeves the outer side of the guiding section 1224 of the adjustment member 122, and two ends of the spring respectively abut against an inner peripheral wall of the sleeve 121 and a side of the second clutch member 132 facing away from the first clutch member 131.

It should be noted that the elastic member 133 may be disposed between the sleeve 121 and the second clutch member 132 through various structures. For example, the elastic member 133 may have two ends directly connected to the sleeve 121 and the second clutch member 132 respectively, or may be indirectly connected to the sleeve 121 and the second clutch member 132, meaning that the elastic member 133 is connected to the sleeve 121 and the second clutch member 132 through other components.

The anti-loosening assembly 13 is further provided with the elastic member 133, and the elastic member 133 is disposed between the sleeve 121 and the second clutch member 132. The elastic force of the elastic member 133 can drive the second clutch member 132 to move toward the first clutch member 131, enabling the engagement between the first clutch member 131 and the second clutch member 132. The anti-loosening assembly 13 with this structure can further improve the stability of the engagement between the first clutch member 131 and the second clutch member 132, reducing the occurrence of accidental disengagement between the first clutch member 131 and the second clutch member 132. Moreover, after the second clutch member 132 and the first clutch member 131 disengage from each other, the elastic member 133 enables the automatic engagement between the second clutch member 132 and the first clutch member 131 without manual intervention, thereby facilitating operation and use.

In some embodiments, as shown in FIG. 14 and FIG. 15, the anti-loosening assembly 13 may further include a stopper 134. The stopper 134 is connected inside the sleeve 121 and surrounds the adjustment member 122, where the elastic member 133 fits around the adjustment member 122, and two ends of the elastic member 133 in the first direction X abut against the stopper 134 and the second clutch member 132, respectively.

The stopper 134 is connected inside the sleeve 121 and surrounds the adjustment member 122, that is, the stopper 134 fits around the outer side of the adjustment member 122, and the stopper 134 is connected to the inner peripheral wall of the sleeve 121. For example, the stopper 134 and the sleeve 121 may be connected through various structures, for example, welding, bonding, or engagement.

The elastic member 133 has its two ends in the first direction X abutting against stopper 134 and second clutch member 132, respectively. That is, one end of the elastic member 133 abuts against the second clutch member 132, and the other end indirectly abuts against the sleeve 121 through the stopper 134.

The anti-loosening assembly 13 is further provided with the stopper 134, the stopper 134 is connected inside the sleeve 121 and surrounds the adjustment member, and the elastic member 133 fits around the outer side of the adjustment member 122. Two ends of the elastic member 133 abut against the stopper 134 and the second clutch member 132, respectively, so that the elastic member 133 is disposed between the sleeve 121 and the second clutch member 132. The anti-loosening assembly 13 with this structure helps to reduce the difficulty of assembling the elastic member 133 between the sleeve 121 and the second clutch member 132, and also helps to improve the assembly stability of the elastic member 133 between the sleeve 121 and the second clutch member 132, thereby reducing falling-off of the elastic member 133.

According to some embodiments of this application, as shown in FIG. 5, FIG. 6, and FIG.7, the locking member 11 includes a fixed portion 111, a movable portion 112, and a first engaging portion 113. The fixed portion 111 is fixed to the adjustment assembly 12, and the movable portion 112 is connected to the adjustment assembly 12. The movable portion 112 is spaced from the fixed portion 111 along the first direction X, and the movable portion 112 is movably disposed on the fixed portion 111 along the first direction X. The first engaging portion 113 connects the movable portion 112 and the fixed portion 111, and the first engaging portion 113 is configured to engage with the lock seat 300. The adjustment assembly 12 is configured to drive the movable portion 112 to approach or leave the fixed portion 111 along the first direction X, causing the first engaging portion 113 to expand or retract in the second direction Y to adjust the dimension of the locking member 11 in the second direction Y.

The fixed portion 111 is fixed to the adjustment assembly 12, that is, the fixed portion 111 is fastened to the adjustment assembly 12. Optionally, the fixed portion 111 may be fixed to the adjustment assembly 12 through various structures, for example, welding, bonding, engagement, or bolting. For example, in FIG. 6 and FIG. 7, the fixed portion 111 is threadedly connected to the sleeve 121 of the adjustment assembly 12, and the fixed portion 111 is disposed at an end of the sleeve 121 of the adjustment assembly 12 in the first direction X.

The movable portion 112 is connected to the adjustment member 122 of the adjustment assembly 12, and the movable portion 112 is capable of moving relative to the fixed portion 111 along the first direction X, enabling the movable portion 112 to approach or leave the fixed portion 111 in the first direction X.

The first engaging portion 113 functions to connect the movable portion 112 and the fixed portion 111, so that the first engaging portion 113 is connected between the movable portion 112 and the fixed portion 111. The first engaging portion 113 can expand or retract in the second direction Y, thereby implementing dimension adjustment of the locking member 11 in the second direction Y. Therefore, when the first engaging portion 113 expands in the second direction Y, the first engaging portion 113 can engage with the lock seat 300, in which case the locking member 11 is in the locked state; and when the first engaging portion 113 retracts in the second direction Y, the first engaging portion 113 can disengage from the lock seat 300, in which case the locking member 11 is in the unlocked state.

It should be noted that the adjustment assembly 12 is configured to drive the movable portion 112 to approach or leave the fixed portion 111 along the first direction X. The adjustment member 122 of the adjustment assembly 12 plays a role in driving the movable portion 112 to approach or leave the fixed portion 111 along the first direction X. For example, in FIG. 6 and FIG. 7, the movable portion 112 is threadedly connected to the outer side of the adjustment member 122, and the adjustment member 122 is configured to able to drive, when rotating relative to the sleeve 121, the movable portion 112 to approach or leave the fixed portion 111 along the first direction X, causing the first engaging portion 113 to expand or retract in the second direction Y. That is, through rotation of the adjustment member 122, the movable portion 112 can be driven to move along the first direction X, enabling the movable portion 112 to approach or leave the fixed portion 111. Certainly, in other embodiments, the adjustment member 122 may alternatively be a structure fixedly connected to the movable portion 112. When moving relative to the sleeve 121 along the first direction X, the adjustment member 122 can drive the movable portion 112 to approach or leave the fixed portion 111 along the first direction X, causing the first engaging portion 113 to expand or retract in the second direction Y.

The locking member 11 is provided with the fixed portion 111, the movable portion 112, and the first engaging portion 113 connecting the fixed portion 111 and the movable portion 112. The fixed portion 111 is fixed to the adjustment assembly 12, and the movable portion 112 is movably disposed on the fixed portion 111 along the first direction X, so that the adjustment member 12 is able to drive the movable portion 112 to approach or leave the fixed portion 111 along the first direction X, causing the first engaging portion 113 connecting the fixed portion 111 and the movable portion 112 to expand or retract in the second direction Y. In this way, the first engaging portion 113 can engage with or disengage from the lock seat 300, implementing the engagement or disengagement between the locking mechanism 10 and the lock seat 300 in the first direction X.

In some embodiments, as shown in FIG. 6 and FIG. 7, the first engaging portion 113 includes a first engaging section 1131 and a second engaging section 1132 that are hinged to each other, where an end of the first engaging section 1131 far from the second engaging section 1132 is hinged to the movable portion 112, and an end of the second engaging section 1132 far from the first engaging section 1131 is hinged to the fixed portion 111.

The first engaging portion 113 is provided with the first engaging section 1131 and the second engaging section 1132 that are hinged to each other, and the first engaging section 1131 and the second engaging section 1132 are respectively hinged to the movable portion 112 and the fixed portion 111. In this way, when the movable portion 112 and the fixed portion 111 approach or leave each other in the first direction X, the included angle between the first engaging section 1131 and the second engaging section 1132 can be adjusted, so that the hinge position of the first engaging section 1131 and the second engaging section 1132 can move in the second direction Y, allowing the first engaging portion 113 to expand or retract in the second direction Y. Such structure is simple and easy to implement.

According to some embodiments of this application, as shown in FIG. 8, FIG. 9, and FIG. 10, the locking member 11 includes a connecting portion 114 and a second engaging portion 115. The connecting portion 114 extends in the first direction X and is connected to the adjustment assembly 12. The second engaging portion 115 is connected to an end of the connecting portion 114 far from the adjustment assembly 12, the second engaging portion 115 protrudes from an outer peripheral surface of the connecting portion 114 along an extending direction of the second engaging portion 115, and the second engaging portion 115 is configured to engage with the lock seat 300. The adjustment assembly 12 is configured to drive the connecting portion 114 to rotate, so that the extending direction of the second engaging portion 115 deviates from or aligns with the second direction Y, to adjust the dimension of the locking member 11 in the second direction Y.

The connecting portion 114 of the locking member 11 is a strip structure extending in the first direction X, with a portion of the connecting portion 114 inserted into the sleeve 121 of the adjustment assembly 12 in the first direction X. The portion of the connecting portion 114 inserted into the sleeve 121 is connected to the adjustment member 122 of the adjustment assembly 12, so that the adjustment member 122 can drive the connecting portion 114 to rotate around an axis extending in the first direction X.

For example, in FIG. 10, the adjustment member 122 is rotatably inserted inside the sleeve 121, and the adjustment member 122 is threadedly connected to the outer side of the connecting portion 114, so that the adjustment member 122 can drive rotation of the connecting portion 114 when rotating relative to the sleeve 121 relative to the sleeve 121, so as to adjust the dimension of the second engaging portion 115 in the second direction Y. Certainly, in other embodiments, the adjustment member 122 may alternatively be movably inserted inside the sleeve 121 along the first direction X, and a guiding structure is provided between the adjustment member 122 and the connecting portion 114. The adjustment member 122 can drive, when moving relative to the sleeve 121 along the first direction X, the connecting portion 114 to rotate relative to the sleeve 121, so as to adjust the dimension of the second engaging portion 115 in the second direction Y.

The second engaging portion 115 protrudes from the outer peripheral surface of the connecting portion 114 along the extending direction of the second engaging portion 115. That is, in the extending direction of the second engaging portion 115, the second engaging portion 115 extends out of the outer peripheral surface of the connecting portion 114. For example, in FIG. 8, the extending direction of the second engaging portion 115 is perpendicular to the first direction X, so that the second engaging portion 115 and the connecting portion 114 form a "T"-shaped structure. Certainly, in other embodiments, the second engaging portion 115 and the connecting portion 114 may alternatively be a "L"-shaped structure.

The locking member 11 is provided with the connecting portion 114 and the second engaging portion 115 connected to an end of the connecting portion 114, and the second engaging portion 115 protrudes from the outer peripheral surface of the connecting portion 114 along the extending direction of the second engaging portion 115. With the connecting portion 114 connected to the adjustment assembly 12, the adjustment assembly 12 is able to drive the connecting portion 114 to rotate, so that the second engaging portion 115 can rotate along with the connecting portion 114, making the extending direction of the second engaging portion 115 deviate from or align with the second direction Y, that is, enabling the second engaging portion 115 to rotate to align with the second direction Y or causing the second engaging portion 115 to deviate from the second direction Y. This allows the second engaging portion 115 to engage with or disengage from the lock seat 300 after rotation, so as to adjust the dimension of the locking member 11 in the second direction Y, allowing the locking mechanism 10 to engage with or disengage from the lock seat 300 in the first direction X.

According to some embodiments of this application, as shown in FIG. 13, FIG. 14, and FIG. 15, the locking member 11 includes an inserting portion 116 and a third engaging portion 117. The inserting portion 116 is connected to the adjustment assembly 12. The third engaging portion 117 is movably disposed on the inserting portion 116, and the third engaging portion 117 is configured to engage with the lock seat 300. The adjustment assembly 12 is configured to drive the third engaging portion 117 to protrude from an outer peripheral surface of the inserting portion 116 or allow the third engaging portion 117 to retract into the inserting portion 116 to adjust the dimension of the locking member 11 in the second direction Y.

The inserting portion 116 is connected to an end of the sleeve 121 of the adjustment assembly 12 in the first direction X, that is, the inserting portion 116 and the sleeve 121 of the adjustment assembly 12 are arranged in the first direction X, and the inserting portion 116 and the sleeve 121 of the adjustment assembly 12 are connected to each other.

For example, the third engaging portion 117 is movably disposed on the inserting portion 116 along the second direction Y, and the adjustment member 122 can be used to push the third engaging portion 117 to move relative to the inserting portion 116 along the second direction Y, enabling the third engaging portion 117 to protrude from the outer peripheral surface of the inserting portion 116.

For example, in FIG. 15, the adjustment member 122 is movably disposed inside the sleeve 121 along the first direction X and the adjustment member 122 is configured to, when moving relative to the sleeve 121 along the first direction X, drive the third engaging portion 117 to protrude from the outer peripheral surface of the inserting portion 116 or allow the third engaging portion 117 to retract into the inserting portion 116, so as to adjust the dimension of the locking member 11 in the second direction Y. Certainly, in other embodiments, the adjustment member 122 may alternatively be in other structures. For example, the adjustment member 122 is rotatably disposed inside the sleeve 121, and the cross-section of the adjustment member 122 perpendicular to the first direction X is an irregular shape, such as an oval or a triangle, so that when the adjustment member 122 rotates relative to the sleeve 121, the third engaging portion 117 can be pushed by the outer peripheral surface of the adjustment member 122 to protrude from the outer peripheral surface of the inserting portion 116 or allow the third engaging portion 117 to retract into the inserting portion 116, so as to adjust the dimension of the locking member 11 in the second direction Y.

The locking member 11 is provided with the inserting portion 116 and the third engaging portion 117, the inserting portion 116 is connected to the adjustment assembly 12, and the third engaging portion 117 is movably disposed in the inserting portion 116. In this way, the adjustment assembly 12 drives the third engaging portion 117 to protrude from the outer peripheral surface of the inserting portion 116 or allows the third engaging portion 117 to retract into the inserting portion 116 to implement engagement or disengagement between the third engaging portion 117 and the lock seat 300, thereby adjusting the dimension of the locking member 11 in the second direction Y, and allowing the locking mechanism 10 to engage with or disengage from the lock seat 300 in the first direction X.

According to some embodiments of this application, as shown in FIG. 7, FIG. 10, and FIG. 15, the second direction Y is perpendicular to the first direction X.

The second direction Y is a direction perpendicular to the first direction X, so that the adjustment assembly 12 can adjust the dimension of the locking member 11in the direction perpendicular to the first direction X, implementing the engagement or disengagement between the locking member 11 and the lock seat 300. The locking mechanism 10 with this structure helps to further enhance the reliability of mutual engagement between the locking member 11 and the lock seat 300, improving the stability and reliability of mutual locking between the locking mechanism 10 and the lock seat 300.

According to some embodiments of this application, this application further provides a battery assembly 100 including a battery 20 and the locking mechanism 10 according to any one of the above solutions, where the locking mechanism 10 is mounted on the battery 20.

As shown in FIG. 3 and FIG. 4, the battery 20 may include a box 21 and a battery cell 22, where the battery cell 22 is accommodated in the box 21, and the locking mechanism 10 is mounted on the box 21.

Optionally, the locking mechanism 10 may be mounted on the battery 20 through various structures. For example, the locking mechanism 10 may be connected to the battery 20 by bolting, bonding, welding, engagement, or other structures.

With the locking mechanism 10 mounted on the battery 20, the battery 20 can be locked to or unlocked from the lock seat 300 of a target object through the locking mechanism 10, thereby implementing battery swap of the battery 20.

According to some embodiments of this application, this application further provides an electric device. As shown in FIG. 2 and FIG. 3, the electric device includes a lock seat 300 and the battery assembly 100 according to any one of the above solutions. The locking mechanism 10 is configured to engage with or disengage from the lock seat 300 in the first direction X, and the battery 20 of the battery assembly 100 is configured to provide electrical energy for the electric device.

The electric device may be any one of the above devices or systems using the battery 20.

For ease of description, the electric device according to an embodiment of this application being a vehicle 1000 is used as an example for description of the following embodiments.

The vehicle 1000 has a mounting frame 200, and the lock seat 300 is mounted on the mounting frame 200. Optionally, the lock seat 300 and the mounting frame 200 may be an integrated structure or separate structures. When the lock seat 300 and the mounting frame 200 are an integrated structure, that is, the lock seat 300 is part of the mounting frame 200; and when the lock seat 300 and the mounting frame 200 are separate structures, the lock seat 300 may be connected to the mounting frame 200 by welding, bolting, engagement, or other structures. For example, in FIG. 2, the lock seat 300 and the mounting frame 200 are separate structures, and the lock seat 300 is threadedly connected to the mounting frame 200 by bolts.

The battery assembly 100 includes a locking mechanism 10 and a battery 20, the locking mechanism 10 is installed on the battery 20, and the locking mechanism 10 is configured to lock to or unlock from the lock seat 300 to implement battery swap for the vehicle 1000.
the electric device is provided with the lock seat 300 and the battery assembly 100, so that the battery 20 of the battery assembly 100 can engage with or disengage from the lock seat 300 of the electric device through the locking mechanism 10, implementing the battery swap function of the battery 20 of the electric device and facilitating replacement of the battery 20. This is easy to operate, helping to improve the battery swap efficiency of the electric device.

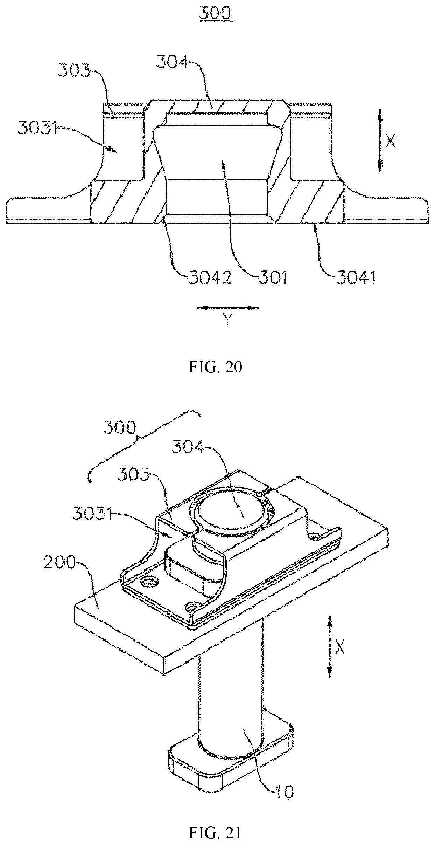

According to some embodiments of this application, referring to FIG. 15 and further referring to FIGs. 19, 20, and 21, FIG. 19 is a schematic structural diagram of a lock seat 300 according to some embodiments of this application, FIG. 20 is a cross-sectional view of a lock seat 300 according to some embodiments of this application, and FIG. 21 is a schematic diagram of connection between a lock seat 300 and a locking mechanism 10 according to some embodiments of this application. The lock seat 300 is provided with a lock hole 301 for insertion of the locking member 11. The lock seat 300 is configured to prevent the locking member 11 from disengaging from the lock hole 301 when the locking member 11 is in the locked state, so as to cause the locking mechanism 10 to engage with the lock seat 300 along the first direction X. The lock seat 300 is further configured to allow the locking member 11 to disengage from the lock hole 301 when the locking member 11 is in the unlocked state, so as to allow the locking mechanism 10 to disengage from the lock seat 300 along the first direction X.

The locking member 11 of the locking mechanism 10 can be inserted into the lock hole 301 of the lock seat 300, so that when the dimension of the locking member 11 in the second direction Y becomes larger, that is, when the locking member 11 is in the locked state, the locking member 11 can engage with the lock seat 300, implementing the mutual locking of the locking mechanism 10 and the lock seat 300; and when the dimension of the locking member 11 in the second direction Y becomes smaller, that is, when the locking member 11 is in the unlocked state, the lock seat 300 can allow the locking member 11 to exit from the lock hole 301, implementing the mutual unlocking of the locking mechanism 10 and the lock seat 300.

The lock seat 300 is provided with the lock hole 301 for insertion of the locking member 11, so that adjusting the dimension of the locking member 11 after inserted into the lock hole 301 can implement engagement or disengagement between the locking member 11 and the lock seat 300, allowing the locking mechanism 10 to engage with or disengage from the lock seat 300 in the first direction X.

According to some embodiments of this application, as shown in FIG. 19, FIG. 20, and FIG. 21, the lock seat 300 may include a fixed seat 303 and a lock seat body 304. The lock seat body 304 is floatingly disposed on the fixed seat 303 in a direction perpendicular to the first direction X, and the lock seat body 304 is provided with a lock hole 301 on a side in the first direction X.

The fixed seat 303 is fixed on the mounting frame 200 for fastening and supporting the lock seat body 304.

The lock seat body 304 is floatingly disposed on the fixed seat 303 in a direction perpendicular to the first direction X, that is, the lock seat body 304 can move relative to the fixed seat 303 in a direction perpendicular to the first direction X.

For example, in FIG. 19, an accommodating space 3031 for accommodating the lock seat body 304 is formed inside the fixed seat 303. The lock seat body 304 is disposed in the accommodating space 3031 of the fixed seat 303, and the fixed seat 303 is provided with an assembly hole 3032. The assembly hole 3032 communicates with the accommodating space 3031. A portion of the lock seat body 304 is inserted into the assembly hole 3032, and a dimension of the portion of the lock seat body 304 inserted into the assembly hole 3032 is smaller than an aperture of the assembly hole 3032, meaning that a gap is present between the lock seat body 304 and a hole wall surface of the assembly hole 3032, so that the lock seat body 304 can move in the direction perpendicular to the first direction X inside the assembly hole 3032, allowing the lock seat body 304 to float relative to the fixed seat 303 in any direction on a plane perpendicular to the first direction X.

The lock hole 301 is disposed on a side of the lock seat body 304 in the first direction X, that is, the lock hole 301 is disposed on a side of the lock body. Correspondingly, the fixed seat 303 is provided with an avoidance hole that avoids the lock hole 301 on a side corresponding to where the lock hole 301 is disposed in the lock seat body 304, so that the locking member 11 of the locking mechanism 10 can be inserted into the lock hole 301.

The lock seat body 304 is floatingly disposed on the fixed seat 303 in the direction perpendicular to the first direction X, allowing for a certain correction function for the lock seat body 304. In this way, the lock seat body 304 can float relative to the fixed seat 303 when the locking member 11 of the locking mechanism 10 is inserted into the lock hole 301, so that the locking member 11 can be stably inserted in the lock hole 301. This structure allows the locking member 11 to be inserted in the lock hole 301 without requiring high assembly accuracy between the locking mechanism 10 and the lock seat 300, helping to reduce manufacturing costs. Additionally, when there is a deviation between the locking member 11 and the lock hole 301, this structure can alleviate the phenomenon of rigid contact between the locking member 11 and the lock seat 300, helping to reduce the risk of damage to the locking mechanism 10 or the lock seat 300.

In some embodiments, as shown in FIG. 20, the lock seat body 304 has a first surface 3041 on a side in the first direction X, and the lock seat body 304 further has a guidance inclined surface 3042, where the guidance inclined surface 3042 connects the first surface 3041 and a hole wall surface of the lock hole 301, and the guidance inclined surface 3042 is configured to guide the locking member 11 into the lock hole 301.

The guidance inclined surface 3042 connects the first surface 3041 and the hole wall surface of the lock hole 301, that is, the lock hole 301 is disposed on the first surface 3041 of the lock seat body 304. The guidance inclined surface 3042 is formed between the first surface 3041 and the hole wall surface of the lock hole 301, so that the first surface 3041 and the hole wall surface of the lock hole 301 are connected through the guidance inclined surface 3042. In this way, when the locking member 11 abuts against the guidance inclined surface 3042, the lock seat body 304 can float relative to the fixed seat 303 under the guidance of the guidance inclined surface 3042, so that the lock hole 301 can be aligned with the locking member 11.

For example, the guidance inclined surface 3042 is a conical surface surrounding the lock hole 301.

The first surface 3041 is formed on the side of the lock seat body 304 where the lock hole 301 is provided, and the first surface 3041 is connected to the hole wall surface of the lock hole 301 through the guidance inclined surface 3042. In this way, when there is a deviation between the locking member 11 and the lock hole 301, the guidance inclined surface 3042 can guide the locking member 11, driving the lock seat body 304 to float relative to the fixed seat to facilitate the insertion of the locking member 11 into the lock hole 301.

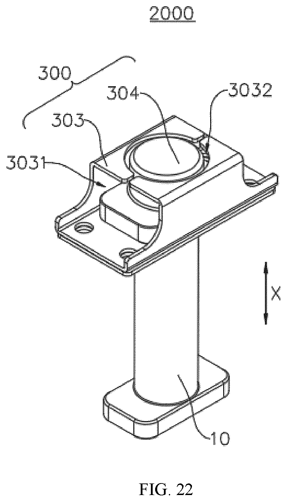

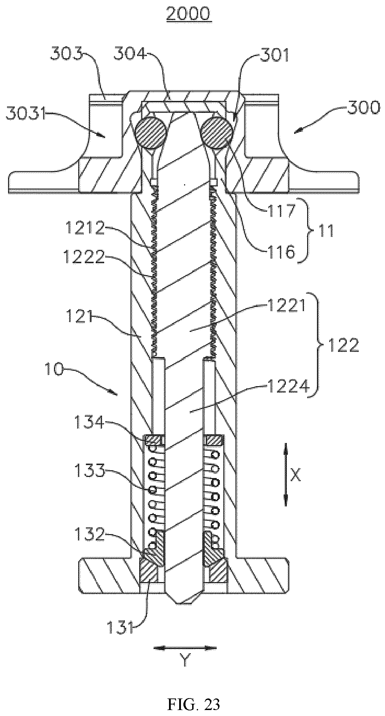

According to some embodiments of this application, this application further provides a locking apparatus 2000. Referring to FIG. 22 and FIG. 23, FIG. 22 is a schematic structural diagram of a locking apparatus 2000 according to some embodiments of this application, and FIG. 23 is a cross-sectional view of a locking apparatus 2000 according to some embodiments of this application. The locking apparatus 2000 includes a lock seat 300 and the locking mechanism 10 according to any one of the above solutions. The locking mechanism 10 is configured to engage with or disengage from the lock seat 300 in the first direction X.

The lock seat 300 is configured to be connected to a target object, so that when the locking mechanism 10 and the lock seat 300 are mutually locked, they can be mutually locked with the target object.

In some embodiments, as shown in FIG. 20 and FIG. 23, the lock seat 300 is provided with a lock hole 301 for insertion of the locking member 11. The lock seat 300 is configured to prevent the locking member 11 from disengaging from the lock hole 301 when the locking member 11 is in the locked state, so as to cause the locking mechanism 10 to engage with the lock seat 300 along the first direction X. The lock seat 300 is further configured to allow the locking member 11 to disengage from the lock hole 301 when the locking member 11 is in the unlocked state, so as to allow the locking mechanism 10 to disengage from the lock seat 300 along the first direction X.

The locking member 11 of the locking mechanism 10 can be inserted into the lock hole 301 of the lock seat 300, so that when the dimension of the locking member 11 in the second direction Y becomes larger, that is, when the locking member 11 is in the locked state, the locking member 11 can engage with the lock seat 300, implementing the mutual locking of the locking mechanism 10 and the lock seat 300; and when the dimension of the locking member 11 in the second direction Y becomes smaller, that is, when the locking member 11 is in the unlocked state, the lock seat 300 can allow the locking member 11 to exit from the lock hole 301, implementing the mutual unlocking of the locking mechanism 10 and the lock seat 300.

The lock seat 300 is provided with the lock hole 301 for insertion of the locking member 11, so that adjusting the dimension of the locking member 11 after inserted into the lock hole 301 can implement engagement or disengagement between the locking member 11 and the lock seat 300, allowing the locking mechanism 10 to engage with or disengage from the lock seat 300 in the first direction X.

According to some embodiments of this application, as shown in FIG. 22 and FIG. 23, the lock seat 300 may include a fixed seat 303 and a lock seat body 304. The lock seat body 304 is floatingly disposed on the fixed seat 303 in a direction perpendicular to the first direction X, and the lock seat body 304 is provided with a lock hole 301 on a side in the first direction X.

The fixed seat 303 is configured to be fixed on the target object for fastening and supporting the lock seat body 304.

The lock seat body 304 is floatingly disposed on the fixed seat 303 in a direction perpendicular to the first direction X, that is, the lock seat body 304 can move relative to the fixed seat 303 in a direction perpendicular to the first direction X.

For example, in FIG. 22, an accommodating space 3031 for accommodating the lock seat body 304 is formed inside the fixed seat 303. The lock seat body 304 is disposed in the accommodating space 3031 of the fixed seat 303, and the fixed seat 303 is provided with an assembly hole 3032. The assembly hole 3032 communicates with the accommodating space 3031. A portion of the lock seat body 304 is inserted into the assembly hole 3032, and a dimension of the portion of the lock seat body 304 inserted into the assembly hole 3032 is smaller than an aperture of the assembly hole 3032, meaning that a gap is present between the lock seat body 304 and a hole wall surface of the assembly hole 3032, so that the lock seat body 304 can move in the direction perpendicular to the first direction X inside the assembly hole 3032, allowing the lock seat body 304 to float relative to the fixed seat 303 in any direction on a plane perpendicular to the first direction X.

The lock hole 301 is disposed on a side of the lock seat body 304 in the first direction X, that is, the lock hole 301 is disposed on a side of the lock seat body 304 for insertion of the locking member 11 along the first direction X. Correspondingly, the fixed seat 303 is provided with an avoidance hole that avoids the lock hole 301 on a side corresponding to where the lock hole 301 is disposed in the lock seat body 304, so that the locking member 11 of the locking mechanism 10 can be inserted into the lock hole 301.

The lock seat body 304 is floatingly disposed on the fixed seat 303 in the direction perpendicular to the first direction X, allowing for a certain correction function for the lock seat body 304. In this way, the lock seat body 304 can float relative to the fixed seat 303 when the locking member 11 of the locking mechanism 10 is inserted into the lock hole 301, so that the locking member 11 can be stably inserted in the lock hole 301. This structure allows the locking member 11 to be inserted in the lock hole 301 without requiring high assembly accuracy between the locking mechanism 10 and the lock seat 300, helping to reduce manufacturing costs. Additionally, when there is a deviation between the locking member 11 and the lock hole 301, this structure can alleviate the phenomenon of rigid contact between the locking member 11 and the lock seat 300, helping to reduce the risk of damage to the locking mechanism 10 or the lock seat 300.

In some embodiments, as shown in FIG. 20 and FIG. 23, the lock seat body 304 has a first surface 3041 on a side in the first direction X, and the lock seat body 304 further has a guidance inclined surface 3042. The guidance inclined surface 3042 connects the first surface 3041 and a hole wall surface of the lock hole 301, and the guidance inclined surface 3042 is configured to guide the locking member 11 into the lock hole 301.

The guidance inclined surface 3042 connects the first surface 3041 and the hole wall surface of the lock hole 301, that is, the lock hole 301 is disposed on the first surface 3041 of the lock seat body 304. The guidance inclined surface 3042 is formed between the first surface 3041 and the hole wall surface of the lock hole 301, so that the first surface 3041 and the hole wall surface of the lock hole 301 are connected through the guidance inclined surface 3042. In this way, when the locking member 11 abuts against the guidance inclined surface 3042, the lock seat body 304 can float relative to the fixed seat 303 under the guidance of the guidance inclined surface 3042, so that the lock hole 301 can be aligned with the locking member 11.

For example, the guidance inclined surface 3042 is a conical surface surrounding the lock hole 301.

The first surface 3041 is formed on the side of the lock seat body 304 where the lock hole 301 is provided, and the first surface 3041 is connected to the hole wall surface of the lock hole 301 through the guidance inclined surface 3042. In this way, when there is a deviation between the locking member 11 and the lock hole 301, the guidance inclined surface 3042 can guide the locking member 11, driving the lock seat body 304 to float relative to the fixed seat to facilitate the insertion of the locking member 11 into the lock hole 301.

According to some embodiments of this application, as shown in FIGs. 5 to 7, this application provides a locking mechanism 10, the locking mechanism 10 includes a locking member 11, an adjustment assembly 12, and an anti-loosening assembly 13. Along the second direction Y, the dimension of the locking member 11 is adjustable to enable the locking member 11 to have a locked state and an unlocked state. The second direction Y is perpendicular to the first direction X. The locking member 11 is configured to engage with the lock seat 300 when in the locked state, causing the locking mechanism 10 to engage with the lock seat 300 along the first direction X. The locking member 11 is configured to disengage from the lock seat 300 when in the unlocked state, allowing the locking mechanism 10 to disengage from the lock seat 300 along the first direction X. The adjustment assembly 12 includes a sleeve 121 and an adjustment member 122. The locking member 11 is disposed in the sleeve 121, and the adjustment member 122 is rotatably inserted into the sleeve 121 around an axis extending in the first direction X. The adjustment member 122 is configured to adjust the dimension of the locking member 11 in the second direction Y when rotating relative to the sleeve 121. The locking member 11 includes a fixed portion 111, a movable portion 112, and a first engaging portion 113. The fixed portion 111 is fixed to the sleeve 121, the movable portion 112 is threadedly connected to the connecting section 1221 of the adjustment member 122, and the movable portion 112 and the fixed portion 111 are spaced apart along the first direction X. The first engaging portion 113 is configured to engage with the lock seat 300, and the first engaging portion 113 includes a first engaging section 1131 and a second engaging section 1132 hinged to each other. An end of the first engaging section 1131 far from the second engaging section 1132 is hinged to the movable portion 112, and an end of the second engaging section 1132 far from the first engaging section 1131 is hinged to the fixed portion 111. The adjustment member 122 is configured to be able to drive, when rotating relative to the sleeve 121, the movable portion 112 to approach or leave the fixed portion 111 along the first direction X, causing the first engaging portion 113 to expand or retract in the second direction Y to adjust the dimension of the locking member 11 in the second direction Y.

The anti-loosening assembly 13 is disposed between the sleeve 121 and the adjustment member 122. The anti-loosening assembly 13 includes a first clutch member 131, a second clutch member 132, and an elastic member 133. The first clutch member 131 is fixed inside the sleeve 121 and surrounds the adjustment member 122. The first clutch member 131 is provided with a first inclined surface 1312 at an end facing the second clutch member 132 along the first direction X, and a first toothed portion 1311 is disposed on the first inclined surface 1312. The second clutch member 132 movably fits around the guiding section 1224 of the adjustment member 122 along the first direction X, and a spline groove extending along the first direction X is disposed on an inner peripheral surface of the second clutch member 132. A spline cooperating with the spline groove is disposed on an outer peripheral surface of the guiding section 1224. The second clutch member 132 is provided with a second inclined surface 1323 that fits with the first inclined surface 1312 at an end facing the first clutch member 131 along the first direction X, and a second toothed portion 1322 is disposed on the second inclined surface 1323. The second clutch member 132 is configured to engage with the first clutch member 131 to limit the rotation of the adjustment member 122 relative to the sleeve 121. The elastic member 133 is disposed between the sleeve 121 and the second clutch member 132. The elastic member 133 is configured to drive the second clutch member 132 to move toward the first clutch member 131, so as to cause the second clutch member 132 to engage with the first clutch member 131.

According to some embodiments of this application, as shown in FIGs. 8 to 12, this application provides a locking mechanism 10, the locking mechanism 10 includes a locking member 11, an adjustment assembly 12, and an anti-loosening assembly 13. Along a second direction Y, a dimension of the locking member 11 is adjustable to enable the locking member 11 to have a locked state and an unlocked state. The second direction Y is perpendicular to the first direction X. The locking member 11 is configured to engage with the lock seat 300 when in the locked state, causing the locking mechanism 10 to engage with the lock seat 300 along the first direction X. The locking member 11 is configured to disengage from the lock seat 300 when in the unlocked state, allowing the locking mechanism 10 to disengage from the lock seat 300 along the first direction X. The adjustment assembly 12 includes a sleeve 121 and an adjustment member 122. The locking member 11 is disposed in the sleeve 121, and the adjustment member 122 is rotatably inserted into the sleeve 121 around an axis extending in the first direction X. The adjustment member 122 is configured to adjust the dimension of the locking member 11 in the second direction Y when rotating relative to the sleeve 121. The locking member 11 includes a connecting portion 114 and a second engaging portion 115. The connecting portion 114 extends in the first direction X, the adjustment member 122 is threadedly connected to the outer side of the connecting portion 114, and the connecting portion 114 is inserted into the sleeve 121. The second engaging portion 115 is located outside the sleeve 121 and is connected to an end of the connecting portion 114 far from the adjustment member 122. The second engaging portion 115 protrudes from an outer peripheral surface of the connecting portion 114 along an extending direction of the second engaging portion 115. The second engaging portion 115 is configured to engage with the lock seat 300. The adjustment member 122 is configured to drive rotation of the connecting portion 114 when rotating relative to the sleeve 121, so that the extending direction of the second engaging portion 115 deviates from or aligns with the second direction Y, to adjust the dimension of the locking member 11 in the second direction Y. The sleeve 121 is provided with a first limiting portion 1211, and the connecting portion 114 is provided with a second limiting portion 1141. The first limiting portion 1211 and the second limiting portion 1141 cooperate to limit the angle of rotation of the connecting portion 114. The first limiting portion 1211 and the second limiting portion 1141 are configured to cooperate, when the adjustment member 122 rotates relative to the sleeve 121, to guide the connecting portion 114 to move along the first direction X. The first limiting portion 1211 is a limiting groove provided on the inner peripheral surface of the sleeve 121. The limiting groove includes a first groove section 1211a, a second groove section 1211b, and a third groove section 1211c sequentially connected. The first groove section 1211a and the third groove section 1211c both extend in the first direction X. The first groove section 1211a and the third groove section 1211c are spaced apart along the circumference of the connecting portion 114, and the first groove section 1211a and the third groove section 1211c are spaced apart in the first direction X. The second limiting portion 1141 is a protrusion disposed on the outer peripheral surface of the connecting portion 114, and the protrusion is accommodated in the limiting groove.

The anti-loosening assembly 13 is disposed between the sleeve 121 and the adjustment member 122. The anti-loosening assembly 13 includes a first clutch member 131, a second clutch member 132, and an elastic member 133. The first clutch member 131 is fixed inside the sleeve 121 and surrounds the adjustment member 122. The first clutch member 131 is provided with a first inclined surface 1312 at an end facing the second clutch member 132 along the first direction X, and a first toothed portion 1311 is disposed on the first inclined surface 1312. The second clutch member 132 movably fits around the guiding section 1224 of the adjustment member 122 along the first direction X, and a spline groove extending along the first direction X is disposed on an inner peripheral surface of the second clutch member 132. A spline cooperating with the spline groove is disposed on an outer peripheral surface of the guiding section 1224. The second clutch member 132 is provided with a second inclined surface 1323 that fits with the first inclined surface 1312 at an end facing the first clutch member 131 along the first direction X, and a second toothed portion 1322 is disposed on the second inclined surface 1323. The second clutch member 132 is configured to engage with the first clutch member 131 to limit the rotation of the adjustment member 122 relative to the sleeve 121. The elastic member 133 is disposed between the sleeve 121 and the second clutch member 132. The elastic member 133 is configured to drive the second clutch member 132 to move toward the first clutch member 131, so as to cause the second clutch member 132 to engage with the first clutch member 131.

According to some embodiments of this application, as shown in FIGs. 13 to 15, this application provides a locking mechanism 10, the locking mechanism 10 includes a locking member 11, an adjustment assembly 12, and an anti-loosening assembly 13. Along the second direction Y, the dimension of the locking member 11 is adjustable to enable the locking member 11 to have a locked state and an unlocked state. The second direction Y is perpendicular to the first direction X. The locking member 11 is configured to engage with the lock seat 300 when in the locked state, causing the locking mechanism 10 to engage with the lock seat 300 along the first direction X. The locking member 11 is configured to disengage from the lock seat 300 when in the unlocked state, allowing the locking mechanism 10 to disengage from the lock seat 300 along the first direction X. The adjustment assembly 12 includes a sleeve 121 and an adjustment member 122. The locking member 11 is disposed in the sleeve 121, and the adjustment member 122 is threadedly connected to the sleeve 121. The adjustment member 122 is configured to move along the first direction X when rotating relative to the sleeve 121 to adjust the dimension of the locking member 11 in the second direction Y. The locking member 11 includes an inserting portion 116 and a third engaging portion 117. The inserting portion 116 is connected to one end of the sleeve 121 in the first direction X. An accommodating cavity 1161 communicating with the interior of the sleeve 121 is formed inside the inserting portion 116. The adjustment member 122 is inserted into the accommodating cavity 1161 along the first direction X. A mounting hole 1162 is disposed on an outer peripheral surface of the inserting portion 116, and the mounting hole 1162 communicates with the accommodating cavity 1161. The third engaging portion 117 is spherical, the third engaging portion 117 is movably disposed in the mounting hole 1162, and the third engaging portion 117 is configured to engage with the lock seat 300. The adjustment member 122 is configured to, when moving relative to the sleeve 121 along the first direction X, drive the third engaging portion 117 to protrude from the outer peripheral surface of the inserting portion 116 or allow the third engaging portion 117 to retract into the inserting portion 116, so as to adjust the dimension of the locking member 11 in the second direction Y. Along the first direction X, a guiding inclined surface 1223 is formed at an end of the adjustment member 122 close to the inserting portion 116. The guiding inclined surface 1223 is configured to abut against the third engaging portion 117 and push the third engaging portion 117 to protrude from the outer peripheral surface of the inserting portion 116.

The anti-loosening assembly 13 is disposed between the sleeve 121 and the adjustment member 122. The anti-loosening assembly 13 includes a first clutch member 131, a second clutch member 132, and an elastic member 133. The first clutch member 131 is fixed inside the sleeve 121 and surrounds the adjustment member 122. The first clutch member 131 is provided with a first inclined surface 1312 at an end facing the second clutch member 132 along the first direction X, and the first inclined surface 1312 is provided with a first toothed portion 1311. The second clutch member 132 movably fits around the guiding section 1224 of the adjustment member 122 along the first direction X, and a spline groove extending along the first direction X is disposed on an inner peripheral surface of the second clutch member 132. A spline cooperating with the spline groove is disposed on an outer peripheral surface of the guiding section 1224. The second clutch member 132 is provided with a second inclined surface 1323 that fits with the first inclined surface 1312 at an end facing the first clutch member 131 along the first direction X, and a second toothed portion 1322 is disposed on the second inclined surface 1323. The second clutch member 132 is configured to engage with the first clutch member 131 to limit the rotation of the adjustment member 122 relative to the sleeve 121. The elastic member 133 is disposed between the sleeve 121 and the second clutch member 132. The elastic member 133 is configured to drive the second clutch member 132 to move toward the first clutch member 131, so as to cause the second clutch member 132 to engage with the first clutch member 131.

It should be noted that, without conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A locking mechanism for engaging with or disengaging from a lock seat along a first direction, wherein the locking mechanism comprises:
a locking member, wherein along a second direction, a dimension of the locking member is adjustable to enable the locking member to have a locked state and an unlocked state, the second direction intersecting the first direction; the locking member is configured to engage with the lock seat when in the locked state, to cause the locking mechanism to engage with the lock seat along the first direction; and the locking member is configured to disengage from the lock seat when in the unlocked state, to allow the locking mechanism to disengage from the lock seat along the first direction; and
an adjustment assembly connected to the locking member, wherein the adjustment assembly is capable of adjusting a dimension of a portion of the locking member for cooperating with the lock seat in the second direction, to enable the locking member to switch between the locked state and the unlocked state.

2. The locking mechanism according to claim 1, wherein along the second direction, the dimension of the portion of the locking member configured to cooperate with the lock seat when in the locked state is greater than when in the unlocked state.

3. The locking mechanism according to claim 1 or 2, wherein the locking member comprises an engaging portion configured to engage with the lock seat, the engaging portion being configured to be extendable in the second direction; wherein
when the locking member is in the locked state, the engaging portion extends in the second direction to engage with the lock seat; and
when the locking member is in the unlocked state, the engaging portion retracts in the second direction to disengage from the lock seat.

4. The locking mechanism according to claim 3, wherein the adjustment assembly comprises:
a sleeve, wherein the locking member is disposed in the sleeve, and the sleeve has an engaging surface facing the engaging portion in the first direction, the engaging surface being configured to abut against the lock seat when the locking member is in the locked state; and
an adjustment member rotatably inserted into the sleeve around an axis extending in the first direction, wherein the adjustment member is capable of rotating relative to the sleeve to enable the locking member to switch between the locked state and the unlocked state,
wherein a minimum distance between the engaging portion and the engaging surface in the first direction remains unchanged when the locking member switches from the locked state to the unlocked state.

5. The locking mechanism according to any one of claims 1 to 4, wherein the adjustment assembly comprises:
a sleeve, wherein the locking member is disposed in the sleeve; and
an adjustment member rotatably inserted into the sleeve around an axis extending in the first direction, wherein the adjustment member is rotatable relative to the sleeve to adjust the dimension of the portion of the locking member configured to cooperate with the lock seat in the second direction.

6. The locking mechanism according to claim 5, wherein the locking member comprises an engaging portion configured to engage with the lock seat, the engaging portion is arranged with the sleeve along the first direction, the sleeve has an engaging surface facing the engaging portion in the first direction, and the engaging surface and the engaging portion are configured to abut against different positions of the lock seat in the first direction when the locking member is in the locked state.

7. The locking mechanism according to claim 5 or 6, wherein the locking member comprises:
a fixed portion fixed to the sleeve;
a movable portion connected to the adjustment member, the movable portion being spaced from the fixed portion along the first direction; and
a first engaging portion connecting the movable portion and the fixed portion, the first engaging portion being configured to engage with the lock seat,
wherein the adjustment member is configured to be able to drive, when rotating relative to the sleeve, the movable portion to approach or leave the fixed portion along the first direction, causing the first engaging portion to expand or retract in the second direction to adjust the dimension of the locking member in the second direction.

8. The locking mechanism according to claim 7, wherein the first engaging portion comprises a first engaging section and a second engaging section that are hinged to each other, an end of the first engaging section far from the second engaging section is hinged to the movable portion, and an end of the second engaging section far from the first engaging section is hinged to the fixed portion.

9. The locking mechanism according to claim 7 or 8, wherein the locking member comprises two first engaging portions, and the two first engaging portions are disposed on two sides of the movable portion along the second direction.

10. The locking mechanism according to any one of claims 7 to 9, wherein the adjustment member comprises a connecting section extending out of the sleeve along the first direction, the movable portion fits around the connecting section, and the movable portion is threadedly connected to the connecting section.

11. The locking mechanism according to claim 5 or 6, wherein the locking member comprises:
a connecting portion extending in the first direction and connected to the adjustment member, wherein the connecting portion is inserted in the sleeve; and
a second engaging portion located outside the sleeve and connected to an end of the connecting portion far from the adjustment member, wherein the second engaging portion protrudes from an outer peripheral surface of the connecting portion along an extending direction of the second engaging portion, and the second engaging portion is configured to engage with the lock seat,
wherein the adjustment member is configured to be able to drive rotation of the connecting portion when rotating relative to the sleeve, so that the extending direction of the second engaging portion deviates from or aligns with the second direction, so as to adjust the dimension of the locking member in the second direction.

12. The locking mechanism according to claim 11, wherein an angle of rotation of the connecting portion relative to the sleeve when the locking member switches from the unlocked state to the locked state is α, satisfying 0° < α < 180°.

13. The locking mechanism according to claim 11 or 12, wherein the sleeve is provided with a first limiting portion, and the connecting portion is provided with a second limiting portion, the first limiting portion and the second limiting portion cooperating to limit an angle of rotation of the connecting portion.

14. The locking mechanism according to claim 13, wherein the first limiting portion and the second limiting portion are configured to cooperate, when the adjustment member rotates relative to the sleeve, to guide the connecting portion to move along the first direction, causing the second engaging portion to move between a first position and a second position along the first direction; wherein
when the second engaging portion is in the first position, the extending direction of the second engaging portion aligns with the second direction to allow the second engaging portion to engage with the lock seat; and
when the second engaging portion is in the second position, the extending direction of the second engaging portion deviates from the second direction to allow the second engaging portion to disengage from the lock seat.

15. The locking mechanism according to claim 14, wherein the first limiting portion is a limiting groove provided on an inner peripheral surface of the sleeve, the second limiting portion is a protrusion disposed on an outer peripheral surface of the connecting portion, and the protrusion is accommodated in the limiting groove.

16. The locking mechanism according to claim 15, wherein the limiting groove comprises a first groove section, a second groove section, and a third groove section sequentially connected, the first groove section and the third groove section both extend in the first direction, the first groove section and the third groove section are spaced apart from each other along a circumferential direction of the connecting portion, and the first groove section and the third groove section are spaced apart along the first direction, and in the first direction, the third groove section is closer to the second engaging portion than the first groove section; and
when the second engaging portion is in the first position, the protrusion is in the first groove section, and when the second engaging portion is in the second position, the protrusion is in the third groove section.

17. The locking mechanism according to any one of claims 11 to 16, wherein the adjustment member has a connecting section, the connecting section fits around the connecting portion, and the connecting section is threadedly connected to the connecting portion.

18. The locking mechanism according to claim 5 or 6, wherein the sleeve is provided with a first guiding portion, and the adjustment member is provided with a second guiding portion, the first guiding portion and the second guiding portion being configured to cooperate, when the adjustment member rotates relative to the sleeve, to guide the adjustment member to move along the first direction to adjust the dimension of the locking member in the second direction.

19. The locking mechanism according to claim 18, wherein the first guiding portion is an internal thread provided on an inner peripheral surface of the sleeve, and the second guiding portion is an external thread provided on an outer peripheral surface of the adjustment member.

20. The locking mechanism according to claim 18 or 19, wherein the locking member comprises:
an inserting portion connected to an end of the sleeve in the first direction; and
a third engaging portion movably disposed in the inserting portion, the third engaging portion being configured to engage with the lock seat;
wherein the adjustment member is configured to drive, when moving relative to the sleeve along the first direction, the third engaging portion to protrude from an outer peripheral surface of the inserting portion or allow the third engaging portion to retract into the inserting portion, so as to adjust the dimension of the locking member in the second direction.

21. The locking mechanism according to claim 20, wherein an accommodating cavity communicating with the inside of the sleeve is formed inside the inserting portion, the adjustment member being inserted into the accommodating cavity along the first direction; and a mounting hole is disposed on the outer peripheral surface of the inserting portion, the mounting hole communicating with the accommodating cavity, and the third engaging portion being movably disposed in the mounting hole.

22. The locking mechanism according to claim 20 or 21, wherein along the first direction, a guiding inclined surface is formed at an end of the adjustment member close to the inserting portion, andthe guiding inclined surface is configured to abut against the third engaging portion and push the third engaging portion to protrude from the outer peripheral surface of the inserting portion.

23. The locking mechanism according to any one of claims 20 to 22, wherein the locking member comprises a plurality of third engaging portions, the plurality of third engaging portions are disposed around the adjustment member, and at least one of the third engaging portions is movably disposed in the inserting portion along the second direction.

24. The locking mechanism according to any one of claims 20 to 23, wherein the third engaging portion is spherical.

25. The locking mechanism according to any one of claims 5 to 24, wherein the locking mechanism further comprises:
an anti-loosening assembly disposed between the sleeve and the adjustment member, wherein the anti-loosening assembly is configured to selectively lock the adjustment member to the sleeve to limit the adjustment member to rotate relative to the sleeve.

26. The locking mechanism according to claim 25, wherein the anti-loosening assembly comprises:
a first clutch member disposed on the sleeve; and
a second clutch member disposed on the adjustment member,
wherein the first clutch member and the second clutch member are configured to: when engaged with each other, limit the adjustment member to rotate relative to the sleeve, and when disengaged from each other, allow the adjustment member to rotate relative to the sleeve.

27. The locking mechanism according to claim 26, wherein the first clutch member and the second clutch member are arranged along the first direction; and
the first clutch member is fixed to the sleeve, the second clutch member is circumferentially locked to the adjustment member, and the second clutch member is movably disposed on the adjustment member along the first direction to allow the second clutch member to engage with or disengage from the first clutch member.

28. The locking mechanism according to claim 27, wherein the adjustment member comprises a guiding section inserted in the sleeve, wherein the second clutch member movably fits around the guiding section along the first direction, a first circumferential limiting portion is disposed on an outer peripheral surface of the guiding section, a second circumferential limiting portion is disposed on an inner peripheral surface of the second clutch member, and the second circumferential limiting portion and the first circumferential limiting portion cooperate to circumferentially lock the second clutch member to the adjustment member.

29. The locking mechanism according to claim 28, wherein the first circumferential limiting portion is a spline extending in the first direction, and the second circumferential limiting portion is a spline groove cooperating with the spline.

30. The locking mechanism according to any one of claims 27 to 29, wherein along the first direction, a first toothed portion is provided at an end of the first clutch member facing the second clutch member, and a second toothed portion is provided at an end of the second clutch member facing the first clutch member, wherein the second toothed portion is configured to mesh with the first toothed portion to implement engagement between the second clutch member and the first clutch member.

31. The locking mechanism according to claim 30, wherein along the first direction, a first inclined surface is formed at an end of the first clutch member facing the second clutch member, and a second inclined surface is formed at an end of the second clutch member facing the first clutch member, the second inclined surface fitting with the first inclined surface; and
the first toothed portion is provided on the first inclined surface, and the second toothed portion is provided on the second inclined surface.

32. The locking mechanism according to claim 31, wherein the first inclined surface is a concave surface provided on the first clutch member, and the second inclined surface is a convex surface provided on the second clutch member.

33. The locking mechanism according to any one of claims 27 to 32, wherein the anti-loosening assembly further comprises:
an elastic member disposed between the sleeve and the second clutch member, wherein the elastic member is configured to drive the second clutch member to move toward the first clutch member, so as to cause the second clutch member to engage with the first clutch member.

34. The locking mechanism according to claim 33, wherein the anti-loosening assembly further comprises:
a stopper connected inside the sleeve and surrounding the adjustment member, wherein the elastic member fits around the adjustment member, and two ends of the elastic member in the first direction abut against the stopper and the second clutch member, respectively.

35. The locking mechanism according to claim 1, wherein the locking member comprises:
a fixed portion fixed to the adjustment assembly;
a movable portion connected to the adjustment assembly, wherein the movable portion is spaced from the fixed portion along the first direction, and the movable portion is movably disposed on the fixed portion along the first direction; and
a first engaging portion connecting the movable portion and the fixed portion, the first engaging portion being configured to engage with the lock seat,
wherein the adjustment assembly is configured to drive the movable portion to approach or leave the fixed portion along the first direction, causing the first engaging portion to expand or retract in the second direction to adjust the dimension of the locking member in the second direction.

36. The locking mechanism according to claim 35, wherein the first engaging portion comprises a first engaging section and a second engaging section that are hinged to each other, wherein an end of the first engaging section far from the second engaging section is hinged to the movable portion, and an end of the second engaging section far from the first engaging section is hinged to the fixed portion.

37. The locking mechanism according to claim 1, wherein the locking member comprises:
a connecting portion extending in the first direction and connected to the adjustment assembly; and
a second engaging portion connected to an end of the connecting portion far from the adjustment assembly, wherein the second engaging portion protrudes from an outer peripheral surface of the connecting portion in an extending direction of the second engaging portion, and the second engaging portion is configured to engage with the lock seat,
wherein the adjustment assembly is configured to drive the connecting portion to rotate, so that the extending direction of the second engaging portion deviates from the second direction or aligns with the second direction, so as to adjust the dimension of the locking member in the second direction.

38. The locking mechanism according to claim 1, wherein the locking member comprises:
an inserting portion connected to the adjustment assembly; and
a third engaging portion movably disposed in the inserting portion, the third engaging portion being configured to engage with the lock seat,
wherein the adjustment assembly is configured to drive the third engaging portion to protrude from an outer peripheral surface of the inserting portion or allow the third engaging portion to retract into the inserting portion to adjust the dimension of the locking member in the second direction.

39. The locking mechanism according to any one of claims 1 to 38, wherein the second direction is perpendicular to the first direction.

40. A battery assembly, comprising:
a battery; and
the locking mechanism according to any one of claims 1 to 39, wherein the locking mechanism is mounted on the battery.

41. An electric device, comprising:
a lock seat; and
the battery assembly according to claim 40, wherein the locking mechanism is configured to engage with or disengage from the lock seat along a first direction, and the battery is configured to provide electric power.

42. The electric device according to claim 41, wherein the lock seat is provided with a lock hole for insertion of the locking member;
the lock seat is configured to prevent the locking member from disengaging from the lock hole when the locking member is in the locked state, so as to cause the locking mechanism to engage with the lock seat along the first direction; and
the lock seat is further configured to allow the locking member to disengage from the lock hole when the locking member is in the unlocked state, so as to allow the locking mechanism to disengage from the lock seat along the first direction.

43. The electric device according to claim 42, wherein the lock seat comprises:
a fixed seat; and
a lock seat body floatingly disposed on the fixed seat along a direction perpendicular to the first direction, wherein the lock seat body is provided with the lock hole on a side in the first direction.

44. The electric device according to claim 43, wherein the lock seat body has a first surface on a side in the first direction, and the lock seat body further has a guidance inclined surface, wherein the guidance inclined surface connects the first surface and a hole wall surface of the lock hole, and the guidance inclined surface is configured to guide the locking member into the lock hole.

45. A locking apparatus, comprising:
a lock seat; and
the locking mechanism according to any one of claims 1 to 39, wherein the locking mechanism is configured to engage with or disengage from the lock seat along the first direction.

46. The locking apparatus according to claim 45, wherein the lock seat is provided with a lock hole for insertion of the locking member;
the lock seat is configured to prevent the locking member from disengaging from the lock hole when the locking member is in the locked state, so as to cause the locking mechanism to engage with the lock seat along the first direction; and
the lock seat is further configured to allow the locking member to disengage from the lock hole when the locking member is in the unlocked state, so as to allow the locking mechanism to disengage from the lock seat along the first direction.

47. The locking apparatus according to claim 46, wherein the lock seat comprises:
a fixed seat; and
a lock seat body floatingly disposed on the fixed seat along a direction perpendicular to the first direction, wherein the lock seat body is provided with the lock hole on a side in the first direction.

48. The locking apparatus according to claim 47, wherein the lock seat body has a first surface on a side in the first direction, and the lock seat body further has a guidance inclined surface, wherein the guidance inclined surface connects the first surface and a hole wall surface of the lock hole, and the guidance inclined surface is configured to guide the locking member into the lock hole.
